# EUROPEAN PATENT SPECIFICATION

(11) **EP 4 567 612 B1**
(45) Date of publication and mention of the grant of the patent: **30.09.2026**
(21) Application number: 25171248.5
(22) Date of filing: 17.04.2025
(51) Int. Cl.: G06F 13/36, G06F 13/38, G06F 13/40, H04L 12/40, H04L 47/80, G06F 15/173, G06F 9/50, H04L 41/0896, H04L 43/0888, H04L 43/0894, H04L 43/16, G06F 13/16, G06F 13/20, G06F 13/42

(54) **BANDWIDTH CONTROL METHOD FOR INTEGRATED CIRCUIT, INTEGRATED CIRCUIT, ELECTRONIC DEVICE, AND STORAGE MEDIUM**
BANDBREITENSTEUERUNGSVERFAHREN FÜR INTEGRIERTE SCHALTUNG, INTEGRIERTE SCHALTUNG, ELEKTRONISCHE VORRICHTUNG UND SPEICHERMEDIUM
PROCÉDÉ DE COMMANDE DE BANDE PASSANTE POUR CIRCUIT INTÉGRÉ, CIRCUIT INTÉGRÉ, DISPOSITIF ÉLECTRONIQUE ET SUPPORT DE STOCKAGE

(30) Priority: 31.10.2024 CN 202411545133
(43) Date of publication of application: 11.06.2025
(73) Proprietor: XG TECH PTE. LTD., Singapore 179098 (SG)
(72) Inventor: YU, Jianfeng, 179098 Singapore (SG)
(74) Representative: v. Bezold & Partner Patentanwälte - PartG mbB

(56) References cited:
- EP-A2- 4 567 599
- US-A1- 2017 063 701

## Description

### FIELD OF THE INVENTION

This disclosure relates to the field of integrated circuit technologies, in particular, to a bandwidth control method for an integrated circuit, an integrated circuit, an electronic device, and a storage medium.

### BACKGROUND OF THE INVENTION

In the field of integrated circuit technologies, a hardware unit is a hardware structure that can independently perform calculation, storage, data transmission, or other tasks in an integrated circuit. When performing a task, the hardware unit may access hardware such as an internal memory through a bus, for example, read an instruction in the internal memory or write a result of executing the instruction into the internal memory.

A complex integrated circuit may include a plurality of hardware units. In this case, a bus bandwidth of the integrated circuit may be allocated to the plurality of hardware units, and each hardware unit can be allocated a part of the bus bandwidth. EP 4 567 599 A2 discloses a technique related to the technical field of integrated circuits and bandwidth control The technique includes: determining bandwidth levels respectively corresponding to a plurality of functional modules in a first hardware unit; and controlling respectively, based on the bandwidth levels respectively corresponding to the functional modules, bandwidths for the functional modules for accessing a second hardware unit. US 2017/063701 A1 discloses a bandwidth control circuit that includes bandwidth control units and a management unit to control each of the bandwidth control units. Each bandwidth control unit includes: a bandwidth monitor unit to monitor a bus usage bandwidth of each of the plurality of the circuit blocks; an operating period observation unit to monitor a start and an end of an operating period of each of the plurality of the circuit blocks; and a limit unit to be enabled to limit the bus usage bandwidth of each of the plurality of the circuit blocks. The management unit limits the bus usage bandwidth, corresponding to a bus average usage bandwidth and the operating period of each of the plurality of the circuit blocks.

### SUMMARY OF THE INVENTION

When an integrated circuit includes a plurality of hardware units, the plurality of hardware units may perform a plurality of tasks in parallel. Because different tasks have different real-time performance requirements, different hardware units have different bus bandwidth requirements when performing different tasks. Then, how to dynamically allocate a bus bandwidth to a hardware unit based on a real-time performance requirement of a task executed by the hardware unit has become an urgent technical problem to be resolved.

To resolve the foregoing technical problem, this disclosure provides a bandwidth control method for an integrated circuit, an integrated circuit, an electronic device, and a storage medium, to dynamically allocate a bus bandwidth to a hardware unit in the integrated circuit, so that the bus bandwidth allocated to the hardware unit meets a real-time performance requirement of a task executed by the hardware unit. The invention is set out in the appended set of claims.

According to a first aspect of this disclosure, a bandwidth control method for an integrated circuit is provided. The method includes: determining a plurality of performance requirement parameters respectively corresponding to a plurality of hardware units in the integrated circuit, wherein the performance requirement parameters represent respective bus bandwidth requirements of the hardware units, and correspond to respective real-time performance requirements of respective tasks executed by the hardware units; determining a first bandwidth threshold based on a first performance requirement parameter in the plurality of performance requirement parameters, wherein the first performance requirement parameter corresponds to a first hardware unit in the plurality of hardware units; determining a second bandwidth threshold based on at least one second performance requirement parameter in the plurality of performance requirement parameters, wherein the at least one second performance requirement parameter respectively corresponds to at least one second hardware unit in the plurality of hardware units other than the first hardware unit; determining a target bandwidth threshold corresponding to the first hardware unit based on the first bandwidth threshold and the second bandwidth threshold; and controlling, based on the target bandwidth threshold, a bandwidth for transmitting data by the first hardware unit through a bus.

According to a second aspect of this disclosure, an integrated circuit is provided, including: a plurality of hardware units, configured to determine a plurality of performance requirement parameters respectively corresponding to the plurality of hardware units, wherein the performance requirement parameters represent respective bus bandwidth requirements of the hardware units, and correspond to respective real-time performance requirements of respective tasks executed by the hardware units; and a bandwidth control unit, configured to determine a first bandwidth threshold based on a first performance requirement parameter in the plurality of performance requirement parameters, where the first performance requirement parameter corresponds to a first hardware unit in the plurality of hardware units. The bandwidth control unit is further configured to determine a second bandwidth threshold based on at least one second performance requirement parameter in the plurality of performance requirement parameters, where the at least one second performance requirement parameter respectively corresponds to at least one second hardware unit in the plurality of hardware units other than the first hardware unit. The bandwidth control unit is further configured to determine a target bandwidth threshold corresponding to the first hardware unit based on the first bandwidth threshold and the second bandwidth threshold. The bandwidth control unit is further configured to control, based on the target bandwidth threshold, a bandwidth for transmitting data by the first hardware unit through a bus.

According to a third aspect of this disclosure, a computer storage medium is provided, storing a computer program configured to perform the bandwidth control method for an integrated circuit according to the first aspect.

According to a fourth aspect of this disclosure, an electronic device is provided, including a processor; and a memory configured to store instructions executable by the processor. The processor is configured to read the executable instructions from the memory, and execute the instruction to implement the bandwidth control method for an integrated circuit according to the first aspect.

According to a fifth aspect of this disclosure, a computer program product is provided. When an instruction in the computer program product is executed by a processor, the bandwidth control method for an integrated circuit according to the first aspect is performed.

According to the technical solutions provided in embodiments of the disclosure, when a plurality of performance requirement parameters respectively corresponding to a plurality of hardware units are determined, a first bandwidth threshold is determined based on a first performance requirement parameter corresponding to a first hardware unit, so that the first bandwidth threshold matches a real-time performance requirement of a task executed by the first hardware unit. A second bandwidth threshold is determined based on a second performance requirement parameter corresponding to a second hardware unit, so that the second bandwidth threshold matches a real-time performance requirement of a task executed by the second hardware unit. Then, a target bandwidth threshold corresponding to the first hardware unit is determined based on the first bandwidth threshold and the second bandwidth threshold, so that the target bandwidth threshold can match the real-time performance requirement of the task executed by the first hardware unit and a real-time performance requirement of a task executed by at least one second hardware unit. Next, a bandwidth for transmitting data by the first hardware unit through a bus is controlled based on the target bandwidth threshold. In this way, a bus bandwidth is dynamically allocated to the first hardware unit, so that the bus bandwidth allocated to the first hardware unit meets the real-time performance requirement of the task executed by the first hardware unit.

### BRIEF DESCRIPTION OF THE DRAWINGS

FIG. 1 is a schematic structural diagram of an integrated circuit according to an exemplary embodiment of this disclosure;
FIG. 2 is a schematic diagram of transmission performance requirement parameters of hardware units according to an exemplary embodiment of this disclosure;
FIG. 3 is a schematic flowchart of a bandwidth control method for an integrated circuit according to an exemplary embodiment of this disclosure;
FIG. 4 is a schematic flowchart of step 303 of the bandwidth control method for an integrated circuit according to an exemplary embodiment of this disclosure;
FIG. 5 is a schematic flowchart of step 3032 of the bandwidth control method for an integrated circuit according to an exemplary embodiment of this disclosure;
FIG. 6 is a schematic flowchart of step 304 of the bandwidth control method for an integrated circuit according to an exemplary embodiment of this disclosure;
FIG. 7 is another schematic flowchart of step 304 of the bandwidth control method for an integrated circuit according to an exemplary embodiment of this disclosure;
FIG. 8 is a schematic flowchart of step 305 of the bandwidth control method for an integrated circuit according to an exemplary embodiment of this disclosure;
FIG. 9 is a schematic structural diagram of a bandwidth control apparatus for an integrated circuit according to an exemplary embodiment of this disclosure;
FIG. 10 is another schematic structural diagram of the bandwidth control apparatus for an integrated circuit according to an exemplary embodiment of this disclosure; and
FIG. 11 is a schematic structural diagram of an electronic device according to an exemplary embodiment of this disclosure.

### DETAILED DESCRIPTION OF THE EMBODIMENTS

To explain this disclosure, exemplary embodiments of this disclosure are described below in detail with reference to the accompanying drawings. It is clear that the described embodiments are merely a part of rather than all embodiments of this disclosure. It should be understood that this disclosure is not limited by the exemplary embodiments.

It should be noted that unless otherwise stated specifically, relative arrangement of components and steps, numerical expressions, and numerical values set forth in these embodiments do not limit the scope of this disclosure.

### Application overview

In the field of integrated circuit technologies, a hardware unit may be a hardware structure that can independently perform calculation, storage, data transmission, or other tasks in an integrated circuit. A complex integrated circuit, for example, a system on a chip (SoC), may include a plurality of hardware units. For example, the integrated circuit may include a plurality of intellectual property (IP) cores, and each IP core corresponds to one hardware unit.

When the integrated circuit includes a plurality of hardware units, the plurality of hardware units may access hardware such as an internal memory through a bus of the integrated circuit to read and write data. In this case, the plurality of hardware units may share a bus bandwidth of the integrated circuit, so that the bus bandwidth of the integrated circuit may be allocated to the plurality of hardware units for use.

When the plurality of hardware units of the integrated circuit execute a plurality of tasks in parallel, different tasks have different real-time performance requirements. The real-time performance requirement of the task is a requirement to complete the task within a specific time limit. Generally, a shorter time limit within which the task is required to be completed indicates a higher real-time performance requirement of the task, and vice versa.

When performing a task, each hardware unit may access hardware such as an internal memory through a bus to read and write related data, for example, read an instruction in the internal memory or write a result of executing the instruction into the internal memory. It can be understood that a larger bus bandwidth allocated to the hardware unit indicates that the hardware unit accesses the internal memory through the bus faster, which consumes less time, so that the hardware unit completes the task in a shorter time.

Usually, real-time performance requirements of tasks are dynamic. For example, a time limit within which a hardware unit A is required to complete a task is 100 ms, which indicates that the task does not have a high real-time performance requirement. However, if the hardware unit A doesn't obtain an enough bus bandwidth during execution of the task, the hardware unit A executes the task slowly, resulting in that the hardware unit A needs to complete most of processing of the task at the end of the time limit, for example, needs to complete 90% of the processing of the task within the last 10 ms of the time limit. In this case, the task becomes a task with a high real-time performance requirement.

It can be seen from above that how to dynamically allocate a bus bandwidth to a hardware unit based on a dynamic real-time performance requirement when the hardware unit executes a task has become an urgent technical problem to be resolved.

To resolve the foregoing technical problem, embodiments of this disclosure provide a bandwidth control method for an integrated circuit. According to the method, a target bandwidth threshold corresponding to each hardware unit (for example, a first hardware unit) is determined based on performance requirement parameters respectively corresponding to a plurality of hardware units, and a bandwidth for transmitting data by each hardware unit through a bus is controlled based on the target bandwidth threshold corresponding to each hardware unit. In this way, a bus bandwidth is dynamically allocated to each hardware unit, so that the bus bandwidth allocated to each hardware unit can meet a real-time performance requirement of a task executed by each hardware unit.

### Exemplary system

An embodiment of this disclosure provides an integrated circuit.

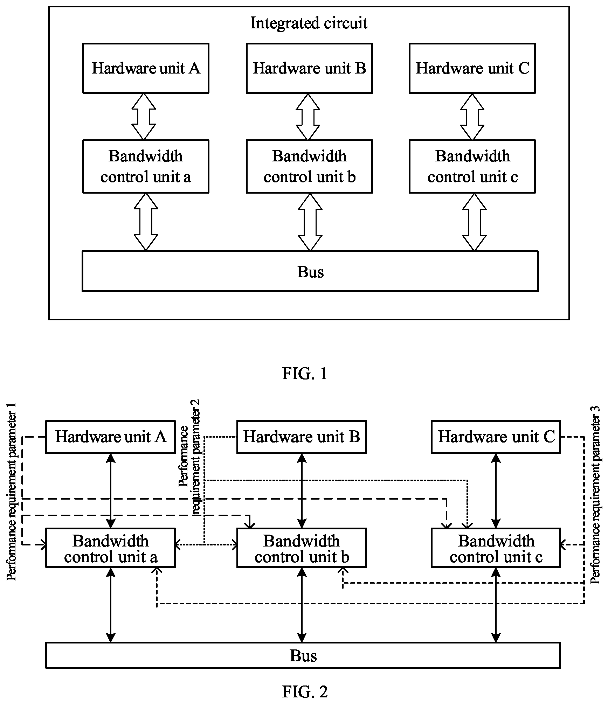

FIG. 1 is a schematic structural diagram of an integrated circuit according to an exemplary embodiment of this disclosure.

As shown in FIG. 1, the integrated circuit may include a plurality of hardware units. In this embodiment of this disclosure, the number of hardware units in the integrated circuit is not limited. Each hardware unit may be a hardware structure that can independently perform a task in the integrated circuit. For example, the integrated circuit may include a plurality of IP cores, and each IP core corresponds to one hardware unit. For example, the hardware unit may be a central processing unit (CPU), a graphics processing unit (GPU), a neural network processing unit (NPU), or a digital signal processor (DSP).

For example, a plurality of operating systems may run on the integrated circuit. The plurality of operating systems may run on different hardware units, or may run on the same hardware unit, which is not limited in this embodiment of this disclosure. The plurality of operating systems may include, for example, a first operating system and a second operating system, the first operating system may be a cockpit system of an intelligent driving vehicle, and the second operating system may be an intelligent driving system of the intelligent driving vehicle.

As shown in FIG. 1, the integrated circuit may further include a bus and a plurality of bandwidth control units. In this embodiment of this disclosure, the bandwidth control units are hardware structures in the integrated circuit, and each bandwidth control unit may correspond to at least one hardware unit. FIG. 1 shows an example that each bandwidth control unit corresponds to one hardware unit.

For example, the integrated circuit includes a hardware unit A, a hardware unit B, and a hardware unit C. For example, the hardware unit A is a CPU, the hardware unit B is a GPU, and the hardware unit C is an NPU. Correspondingly, the integrated circuit further includes a bandwidth control unit a, a bandwidth control unit b, and a bandwidth control unit c. The hardware unit A corresponds to the bandwidth control unit a, the hardware unit B corresponds to the bandwidth control unit b, and the hardware unit C corresponds to the bandwidth control unit c. That is, each hardware unit has a bandwidth control unit corresponding thereto, and different hardware units correspond to different bandwidth control units.

In this embodiment of this disclosure, when a hardware unit corresponding to any bandwidth control unit transmits data through the bus, for example, when the hardware unit corresponding to the bandwidth control unit accesses hardware such as an internal memory through the bus to read an instruction in the internal memory or write a result of executing the instruction into the internal memory, the bandwidth control unit may control a bandwidth for transmitting data through the bus by the hardware unit corresponding to the bandwidth control unit.

According to the invention, each hardware unit generates a performance requirement parameter corresponding to each hardware unit based on a real-time performance requirement of a task executed by each hardware unit. According to the invention, the performance requirement parameter corresponding to the hardware unit represents a bus bandwidth requirement of the hardware unit.

It should be noted herein that in the field of integrated circuit technologies, a bandwidth is an amount of data transmitted per unit time. For example, a bus bandwidth is an amount of data transmitted per unit time on the bus. A unit of the bandwidth may be bit per second (bps), kilobit per second (kbps), megabit per second (Mbps), gigabit per second (Gbps), or the like. Correspondingly, a unit of a bandwidth threshold may also be bps, kbps, Mbps, Gbps, or the like.

The hardware unit may generate the performance requirement parameter periodically or when the real-time performance requirement of the task executed by the hardware unit changes, which is not limited in this embodiment of this disclosure.

For example, the performance requirement parameter may include a performance requirement parameter value. A larger performance requirement parameter value indicates a higher bus bandwidth requirement of the hardware unit, and a smaller performance requirement parameter value indicates a lower bus bandwidth requirement of the hardware unit.

For example, the performance requirement parameter value may be a bit value with a preset bit length. The preset bit length may be, for example, 3 bits, 4 bits, 5 bits, 6 bits, 7 bits, 8 bits, or 16 bits, which is not limited in this embodiment of this disclosure.

According to the invention, the performance requirement parameter corresponding to the hardware unit corresponds to the real-time performance requirement of the task executed by the hardware unit. The real-time performance requirement of the task is a requirement to complete the task within a specific time limit. A shorter time limit within which the task is required to be completed indicates a higher real-time performance requirement of the task, and a longer time limit within which the task is required to be completed indicates a lower real-time performance requirement of the task.

Correspondingly, when the hardware unit executes a task with a high real-time performance requirement, to reduce a time consumed to execute the task, the hardware unit needs to reduce a time consumed to read, from the internal memory through the bus, data required for executing the task and a time consumed to write an execution result of the task into the internal memory through the bus. Therefore, the hardware unit has a high internal memory bandwidth requirement. In this case, the hardware unit generates a large performance requirement parameter value. That is, a higher real-time performance requirement of the task executed by the hardware unit indicates a larger performance requirement parameter value corresponding to the hardware unit.

Similarly, when the hardware unit executes a task with a low real-time performance requirement, the hardware unit does not need to read, from the internal memory through the bus in a short time, data required for executing the task or write an execution result of the task into the internal memory through the bus in a short time. Therefore, the hardware unit has a low internal memory bandwidth requirement. In this case, the hardware unit generates a small performance requirement parameter value. That is, a lower real-time performance requirement of the task executed by the hardware unit indicates a smaller performance requirement parameter value corresponding to the hardware unit.

Generally, when the hardware unit executes a task, a real-time performance requirement of the task is dynamic, so that an internal memory bandwidth requirement of the hardware unit during execution of the task is also dynamic. For example, the hardware unit A is a CPU, the hardware unit B is a GPU, and the hardware unit C is an NPU. A total bus bandwidth is 100 Gbps, a bus bandwidth allocated to the hardware unit A is 40 Gbps, a bus bandwidth allocated to the hardware unit B is 30 Gbps, and a bus bandwidth allocated to the hardware unit C is 30 Gbps. On this basis, a reason why a bus bandwidth allocated to a hardware unit cannot meet a real-time performance requirement of a task executed by the hardware unit is illustrated by using examples that the hardware unit A performs a video decoding task, the hardware unit B performs an environment rendering task in an intelligent driving scenario, and the hardware unit C performs a route planning task in the intelligent driving scenario.

In a first example, the hardware unit A performs the video decoding task. When a video has a lower bit rate, the hardware unit A needs to decode less data, so that the hardware unit A has less access to the internal memory, and therefore has a lower bus bandwidth requirement. In this case, the bus bandwidth of 40 Gbps can meet a real-time performance requirement of the video decoding task. When the video has a higher bit rate or content in the video changes greatly in a short time, the hardware unit A needs to decode more data, so that the hardware unit A has more access to the internal memory, and therefore has a higher bus bandwidth requirement, resulting in that the bus bandwidth of 40 Gbps cannot meet the real-time performance requirement of the video decoding task.

In a second example, the hardware unit B performs the environment rendering task in the intelligent driving scenario. When an environment includes fewer vehicles and pedestrians, the hardware unit B needs to render less content (including the vehicles, the pedestrians, and the like), so that the hardware unit B has less access to the internal memory, and therefore has a lower bus bandwidth requirement. In this case, the bus bandwidth of 30 Gbps can meet a real-time performance requirement of the environment rendering task. When the environment includes more vehicles and pedestrians (for example, when vehicles are traveling to an intersection), the hardware unit B needs to render more content, so that the hardware unit B has more access to the internal memory, and therefore has a higher bus bandwidth requirement, resulting in that the bus bandwidth of 30 Gbps cannot meet the real-time performance requirement of the environment rendering task.

In a third example, the hardware unit C performs the route planning task in the intelligent driving scenario. When a vehicle travels on an elevated road, due to simple road conditions, the hardware unit C needs to make fewer decisions such as lane change, avoidance, acceleration, and deceleration, so that the hardware unit C has less access to the internal memory, and therefore has a lower bus bandwidth requirement. In this case, the bus bandwidth of 30 Gbps can meet a real-time performance requirement of the route planning task. When the vehicle travels in an urban area with more roads, due to complex road conditions, the hardware unit C needs to make more decisions such as lane change, avoidance, acceleration, and deceleration, so that the hardware unit C has more access to the internal memory, and therefore has a higher bus bandwidth requirement, resulting in that the bus bandwidth of 30 Gbps cannot meet the real-time performance requirement of the route planning task.

It can be seen from the foregoing examples that each hardware unit has a dynamic internal memory bandwidth requirement during execution of the task. Therefore, if a bus bandwidth is statically allocated to the hardware unit, the bus bandwidth allocated to the hardware unit cannot meet the real-time performance requirement of the task executed by the hardware unit.

After generating a corresponding performance requirement parameter, each hardware unit may transmit the corresponding performance requirement parameter to a plurality of bandwidth control units. Correspondingly, each bandwidth control unit may obtain a plurality of performance requirement parameters. The plurality of performance requirement parameters include a performance requirement parameter generated by at least one of the plurality of hardware units in the integrated circuit.

For example, as shown in FIG. 2, the integrated circuit includes a hardware unit A, a hardware unit B, a hardware unit C, a bandwidth control unit a, a bandwidth control unit b, and a bandwidth control unit c. The hardware unit A corresponds to the bandwidth control unit a, the hardware unit B corresponds to the bandwidth control unit b, and the hardware unit C corresponds to the bandwidth control unit c. The plurality of performance requirement parameters include a performance requirement parameter corresponding to the hardware unit A, a performance requirement parameter corresponding to the hardware unit B, and/or a performance requirement parameter corresponding to the hardware unit C.

For example, as shown in FIG. 2, after generating a performance requirement parameter 1, the hardware unit A may transmit the performance requirement parameter 1 to the corresponding bandwidth control unit a, and may further transmit the performance requirement parameter 1 to the bandwidth control unit b corresponding to the hardware unit B and/or the bandwidth control unit c corresponding to the hardware unit C. After generating a performance requirement parameter 2, the hardware unit B may transmit the performance requirement parameter 2 to the corresponding bandwidth control unit b, and may further transmit the performance requirement parameter 2 to the bandwidth control unit a corresponding to the hardware unit A and/or the bandwidth control unit c corresponding to the hardware unit C. The rest can be deduced by analogy.

For example, each hardware unit may transmit the corresponding performance requirement parameter to the plurality of bandwidth control units in different manners, which is not limited in this embodiment of this disclosure. For example, each hardware unit may directly transmit the performance requirement parameter to the plurality of bandwidth control units through circuits between the hardware unit and the plurality of bandwidth control units. For another example, each hardware unit may write the corresponding performance requirement parameter into a shared space of a register, and each bandwidth control unit may read a plurality of performance requirement parameters respectively corresponding to a plurality of hardware units from the shared space of the register.

To facilitate subsequent description of correspondence between the plurality of bandwidth control units, the plurality of hardware units, and the plurality of performance requirement parameters, in the following, a hardware unit corresponding to any one of the plurality of bandwidth control units is referred to as a first hardware unit, and a hardware unit other than the first hardware unit in the plurality of hardware units is referred to as a second hardware unit. For example, for the bandwidth control unit a, the hardware unit A is a first hardware unit, and the hardware unit B and the hardware unit C are second hardware units. For the bandwidth control unit b, the hardware unit B is a first hardware unit, and the hardware unit A and the hardware unit C are second hardware units. In addition, a performance requirement parameter corresponding to the first hardware unit is referred to as a first performance requirement parameter, and a performance requirement parameter corresponding to the second hardware unit is referred to as a second performance requirement parameter.

Next, when a first hardware unit corresponding to any bandwidth control unit transmits data through the bus, for example, when the first hardware unit accesses the internal memory through the bus, the bandwidth control unit may control, based on obtained performance requirement parameters corresponding to a plurality of hardware units, a bandwidth for transmitting data by the first hardware unit through the bus.

For example, the bandwidth control unit may determine a first bandwidth threshold based on a first performance requirement parameter corresponding to the first hardware unit, and determine a second bandwidth threshold based on at least one second performance requirement parameter corresponding to at least one second hardware unit. Next, the bandwidth control unit may determine a target bandwidth threshold corresponding to the first hardware unit based on the first bandwidth threshold and the second bandwidth threshold, and control, based on the target bandwidth threshold, the bandwidth for transmitting data by the first hardware unit through the bus. For ease of description, in the following, the bandwidth for transmitting data by the first hardware unit through the bus may be referred to as a first bandwidth for short.

In embodiments of this disclosure, the first bandwidth threshold is determined based on the first performance requirement parameter corresponding to the first hardware unit, so that the first bandwidth threshold can match a real-time performance requirement of a task executed by the first hardware unit. Therefore, if the first bandwidth is controlled based on the first bandwidth threshold, the real-time performance requirement of the task executed by the first hardware unit can be met, but a bus bandwidth allocated to a second hardware unit may be too small to meet a real-time performance requirements of a task executed by the second hardware unit.

Similarly, the second bandwidth threshold is determined based on the at least one second performance requirement parameter corresponding to the at least one second hardware unit, so that the second bandwidth threshold can match a real-time performance requirement of a task executed by the at least one second hardware unit. Therefore, if the first bandwidth is controlled based on the second bandwidth threshold, the real-time performance requirement of the task executed by the first hardware unit probably cannot be met, but the real-time performance requirement of the task executed by the at least one second hardware unit can be met.

Based on this, embodiments of this disclosure allow for both the real-time performance requirement of the task executed by the first hardware unit and the real-time performance requirement of the task executed by the at least one second hardware unit. A target bandwidth threshold corresponding to the first hardware unit is determined based on the first bandwidth threshold and the second bandwidth threshold, and the bandwidth for transmitting data by the first hardware unit through the bus is controlled based on the target bandwidth threshold, so that a bus bandwidth is more properly allocated, and a bus bandwidth obtained by the first hardware unit can meet the real-time performance requirement of the task executed by the first hardware unit.

### Exemplary method

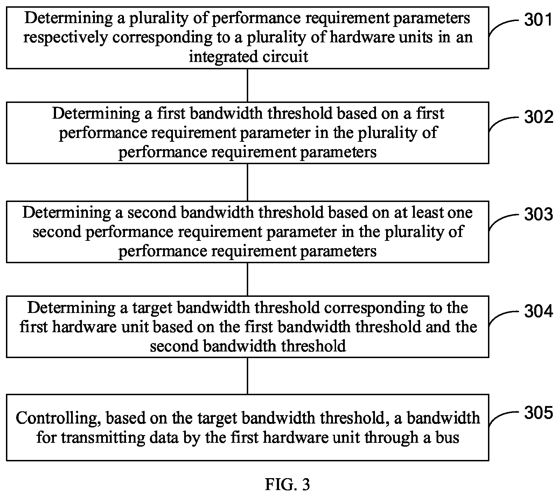

FIG. 3 is a schematic flowchart of a bandwidth control method for an integrated circuit according to an exemplary embodiment of this disclosure. This embodiment may be applied to an integrated circuit. As shown in FIG. 3, the method includes the following steps:
Step 301: Determinig a plurality of performance requirement parameters respectively corresponding to a plurality of hardware units in the integrated circuit.

In an embodiment, the plurality of hardware units may generate the performance requirement parameters respectively corresponding to the plurality of hardware units based on respective real-time performance requirements. A real-time performance requirement of a task executed by a hardware unit is in correspondence with a performance requirement parameter corresponding to the hardware unit, and different real-time performance requirements correspond to different performance requirement parameters.

Each hardware unit may generate a performance requirement parameter in different ways. In an example, each hardware unit may periodically generate a performance requirement parameter. In another example, each hardware unit may generate a performance requirement parameter when a real-time performance requirement of each hardware unit changes. In this embodiment of this disclosure, a manner in which each hardware unit generates a performance requirement parameter is not limited.

For example, the performance requirement parameter may include a performance requirement parameter value. Different real-time performance requirements correspond to different performance requirement parameter values. A higher real-time performance requirement corresponds to a larger performance requirement parameter value, and a lower real-time performance requirement corresponds to a smaller performance requirement parameter value.

For example, the performance requirement parameter value may be a bit value with a preset bit length. The preset bit length may be, for example, 3 bits, 4 bits, 5 bits, 6 bits, 7 bits, 8 bits, or 16 bits, which is not limited in this embodiment of this disclosure. For example, the performance requirement parameter value is a bit value of 4 bits. Then, a range of the performance requirement parameter value may be 0000 to 1111.

In some embodiments, the performance requirement parameter may also be described as an urgency parameter, for example, a hurrylevel parameter, and correspondingly, the performance requirement parameter value may also be described as an urgency level value, for example, a hurrylevel value, which are not limited in this embodiment of this disclosure.

Step 302: Determining a first bandwidth threshold based on a first performance requirement parameter in the plurality of performance requirement parameters.

The first performance requirement parameter is a performance requirement parameter generated by a first hardware unit corresponding to any one of the plurality of bandwidth control units. That is, the first performance requirement parameter corresponds to the first hardware unit.

For example, as shown in FIG. 2, the hardware unit A corresponds to the bandwidth control unit a. Therefore, for the bandwidth control unit a, the first hardware unit is the hardware unit A, and the first performance requirement parameter is the performance requirement parameter 1 corresponding to the hardware unit A.

For example, as shown in FIG. 2, the hardware unit B corresponds to bandwidth control unit b. Therefore, for the bandwidth control unit b, the first hardware unit is the hardware unit B, and the first performance requirement parameter is the performance requirement parameter 2 corresponding to the hardware unit B.

For example, as shown in FIG. 2, the hardware unit C corresponds to the bandwidth control unit c. Therefore, for the bandwidth control unit c, the first hardware unit is the hardware unit C, and the first performance requirement parameter is the performance requirement parameter 3 corresponding to hardware unit C.

The plurality of performance requirement parameters are in correspondence with a plurality of bandwidth thresholds. For example, each performance requirement parameter may correspond to one bandwidth threshold, and different performance requirement parameters correspond to different bandwidth thresholds.

In an embodiment, the bandwidth control unit may determine the first bandwidth threshold corresponding to the first performance requirement parameter based on the correspondence between the plurality of performance requirement parameters and the plurality of bandwidth thresholds.

For example, the correspondence between the plurality of performance requirement parameters and the plurality of bandwidth thresholds may be stored in a register of the integrated circuit. The bandwidth control unit may read the correspondence between the plurality of performance requirement parameters and the plurality of bandwidth thresholds from the register, to determine the first bandwidth threshold corresponding to the first performance requirement parameter.

For example, the bandwidth threshold may be directly indicated by the performance requirement parameter. For example, the bandwidth threshold may be included in the performance requirement parameter. For another example, the performance requirement parameter may be mapped to the bandwidth threshold by using an algorithm. In this embodiment of this disclosure, a manner in which the performance requirement parameter indicates the bandwidth threshold is not limited.

A unit of the bandwidth threshold may be bps, kbps, Mbps, Gbps, or the like.

In an embodiment, the first bandwidth threshold indicates a lower bandwidth limit of a first bandwidth.

The first bandwidth is a bandwidth for transmitting data by the first hardware unit through a bus.

It can be understood that since the first bandwidth threshold is determined based on the first performance requirement parameter corresponding to the first hardware unit, the first bandwidth threshold matches a real-time performance requirement of a task executed by the first hardware unit. That is, to meet the real-time performance requirement, the first hardware unit expects the first bandwidth of the first hardware unit to be greater than or equal to the first bandwidth threshold. However, if the first bandwidth is controlled based on the first bandwidth threshold, for example, the first bandwidth is controlled to be greater than or equal to the first bandwidth threshold, although the real-time performance requirement of the task executed by the first hardware unit can be met, a bus bandwidth allocated to a second hardware unit may be too small to meet a real-time performance requirements of a task executed by the second hardware unit.

Step 303: Determining a second bandwidth threshold based on at least one second performance requirement parameter in the plurality of performance requirement parameters.

The at least one second performance requirement parameter is a performance requirement parameter respectively generated by at least one second hardware unit in the plurality of hardware units other than the first hardware unit. That is, the at least one second performance requirement parameter respectively corresponds to the at least one second hardware unit.

In an embodiment, the bandwidth control unit may determine at least one respective bandwidth threshold corresponding to the at least one second performance requirement parameter based on the correspondence between the plurality of performance requirement parameters and the plurality of bandwidth thresholds, and then determine the second bandwidth threshold based on the at least one bandwidth threshold.

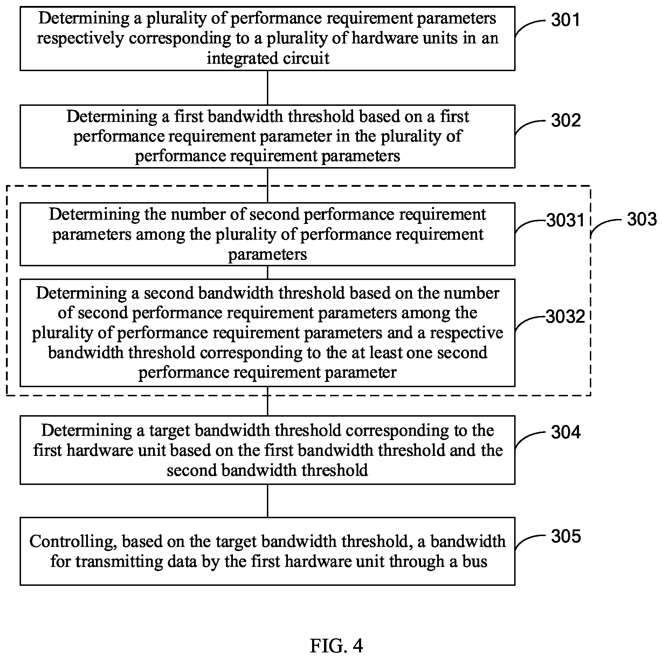

A specific manner in which the bandwidth control unit determines the second bandwidth threshold based on the at least one second performance requirement parameter in the plurality of performance requirement parameters is further explained in a subsequent embodiment with reference to FIG. 4.

In an embodiment, the second bandwidth threshold indicates an upper bandwidth limit value of the first bandwidth.

It can be understood that because the second bandwidth threshold is determined based on the at least one second performance requirement parameter respectively corresponding to the at least one second hardware unit, the second bandwidth threshold matches a real-time performance requirement of a task executed by the at least one second hardware unit. That is, to meet the real-time performance requirement, the at least one second hardware unit expects the first bandwidth to be less than or equal to the second bandwidth threshold, so that a remaining bus bandwidth is allocated to the second hardware unit. However, if the first bandwidth is controlled based on the second bandwidth threshold, for example, the first bandwidth is controlled to be less than or equal to the second bandwidth threshold, although the real-time performance requirement of the task executed by the at least one second hardware unit can be met, a bus bandwidth allocated to the first hardware unit may be too small to meet the real-time performance requirements of the task performed by the first hardware unit.

Step 304: Determining a target bandwidth threshold corresponding to the first hardware unit based on the first bandwidth threshold and the second bandwidth threshold.

In an embodiment, the bandwidth control unit may determine the target bandwidth threshold based on a numerical relationship between the first bandwidth threshold and the second bandwidth threshold, for example, magnitudes of the first bandwidth threshold and the second bandwidth threshold, or a magnitude of a difference between the first bandwidth threshold and the second bandwidth threshold, or a magnitude of a ratio between the first bandwidth threshold and the second bandwidth threshold.

For example, the target bandwidth threshold may be the first bandwidth threshold, the second bandwidth threshold, or another value determined based on the first bandwidth threshold and the second bandwidth threshold, which is not limited in this embodiment of this disclosure.

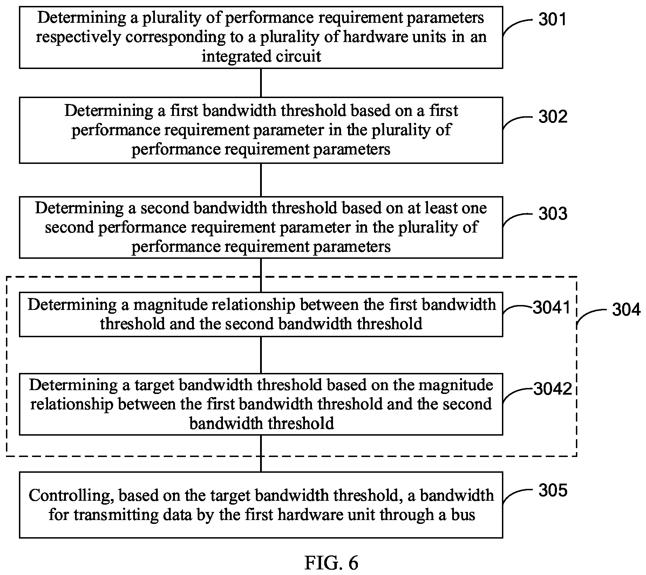

A specific manner in which the bandwidth control unit determines the target bandwidth threshold corresponding to the first hardware unit based on the first bandwidth threshold and the second bandwidth threshold is further explained in a subsequent embodiment with reference to FIG. 6.

Step 305: Controlling , based on the target bandwidth threshold, the bandwidth for transmitting data by the first hardware unit through the bus.

In an embodiment, the target bandwidth threshold indicates an upper bandwidth limit value of the first bandwidth. The bandwidth control unit may control, based on the target bandwidth threshold, the first bandwidth to be less than or equal to the target bandwidth threshold.

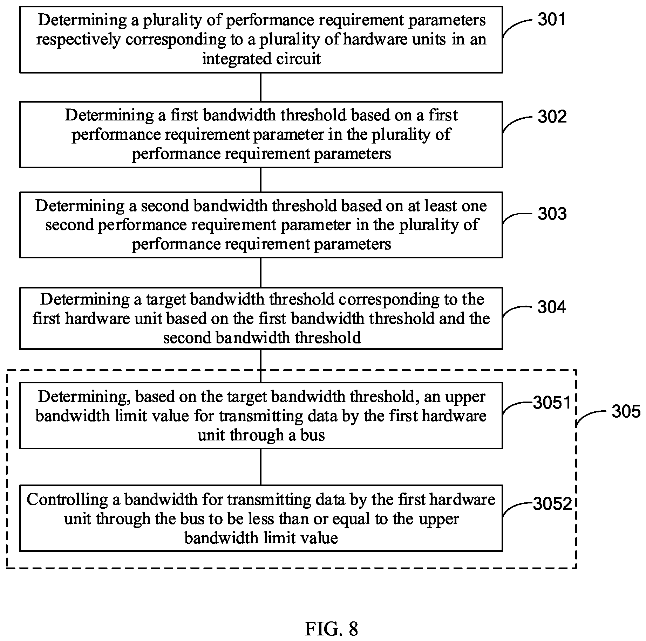

A specific manner in which the bandwidth control unit controls, based on the target bandwidth threshold, the bandwidth for transmitting data by the first hardware unit through the bus is further explained in a subsequent embodiment with reference to FIG. 8.

It should be noted herein that in this embodiment of this disclosure, when the integrated circuit includes a plurality of bandwidth control units, the plurality of bandwidth control units may perform step 302 to step 305 in parallel. When step 302 to step 305 are performed by different bandwidth control units, the first hardware unit and the second hardware unit are also different.

For example, as shown in FIG. 2, when the bandwidth control unit a performs step 302 to step 305, the first hardware unit is the hardware unit A, and the second hardware unit is the hardware unit B and the hardware unit C. When the bandwidth control unit b performs step 302 to step 305, the first hardware unit is the hardware unit B, and the second hardware unit is the hardware unit A and the hardware unit C. When the bandwidth control unit c performs step 302 to step 305, the first hardware unit is the hardware unit C, and the second hardware unit is the hardware unit A and the hardware unit B.

Correspondingly, because different bandwidth control units correspond to different first hardware units, when different bandwidth control units perform step 302 to step 305, target bandwidth thresholds corresponding to different hardware units may be determined to control bandwidths for transmitting data by the different hardware units through the bus.

For example, the bandwidth control unit a performs step 302 to step 305, so that a bandwidth for transmitting data by the hardware unit A through the bus can be controlled based on a target bandwidth threshold M1 corresponding to the hardware unit A. The bandwidth control unit b performs step 302 to step 305, so that a bandwidth for transmitting data by the hardware unit B through the bus can be controlled based on a target bandwidth threshold M2 corresponding to the hardware unit B. The bandwidth control unit c performs step 302 to step 305, so that a bandwidth for transmitting data by the hardware unit C through the bus can be controlled based on a target bandwidth threshold M3 corresponding to the hardware unit C.

It can be seen from the foregoing technical solution that, according to the method provided in this embodiment of this disclosure, when a plurality of performance requirement parameters respectively corresponding to a plurality of hardware units are determined, a first bandwidth threshold is determined based on a first performance requirement parameter corresponding to a first hardware unit, so that the first bandwidth threshold matches a real-time performance requirement of a task executed by the first hardware unit. A second bandwidth threshold is determined based on a second performance requirement parameter corresponding to a second hardware unit, so that the second bandwidth threshold matches a real-time performance requirement of a task executed by the second hardware unit. Then, a target bandwidth threshold corresponding to the first hardware unit is determined based on the first bandwidth threshold and the second bandwidth threshold, so that the target bandwidth threshold can match the real-time performance requirement of the task executed by the first hardware unit and a real-time performance requirement of a task executed by at least one second hardware unit. Next, a bandwidth for transmitting data by the first hardware unit through a bus is controlled based on the target bandwidth threshold. In this way, a bus bandwidth is dynamically allocated to the first hardware unit, so that the bus bandwidth allocated to the first hardware unit meets the real-time performance requirement of the task executed by the first hardware unit.

As shown in FIG. 4, based on the embodiment shown in FIG. 3, step 303 may include the following steps:
Step 3031: Determining the number of second performance requirement parameters among the plurality of performance requirement parameters.

For example, when one second hardware unit generates a second performance requirement parameter, or in other words, when one second hardware unit transmits a second performance requirement parameter to a bandwidth control unit, the bandwidth control unit may obtain one second performance requirement parameter. Therefore, the bandwidth control unit may determine that there is one second performance requirement parameter.

For example, when a plurality of second hardware units generate second performance requirement parameters, or in other words, when a plurality of second hardware units separately transmit second performance requirement parameters to the bandwidth control unit, the bandwidth control unit may obtain a plurality of second performance requirement parameters. Therefore, the bandwidth control unit may determine that there are a plurality of second performance requirement parameters.

Step 3032: Determining the second bandwidth threshold based on the number of second performance requirement parameters among the plurality of performance requirement parameters and the respective bandwidth threshold corresponding to the at least one second performance requirement parameter.

In response to the number of the second performance requirement parameters being one or more, the bandwidth control unit may determine, in different manners, the second bandwidth threshold based on the respective bandwidth threshold corresponding to the at least one second performance requirement parameter.

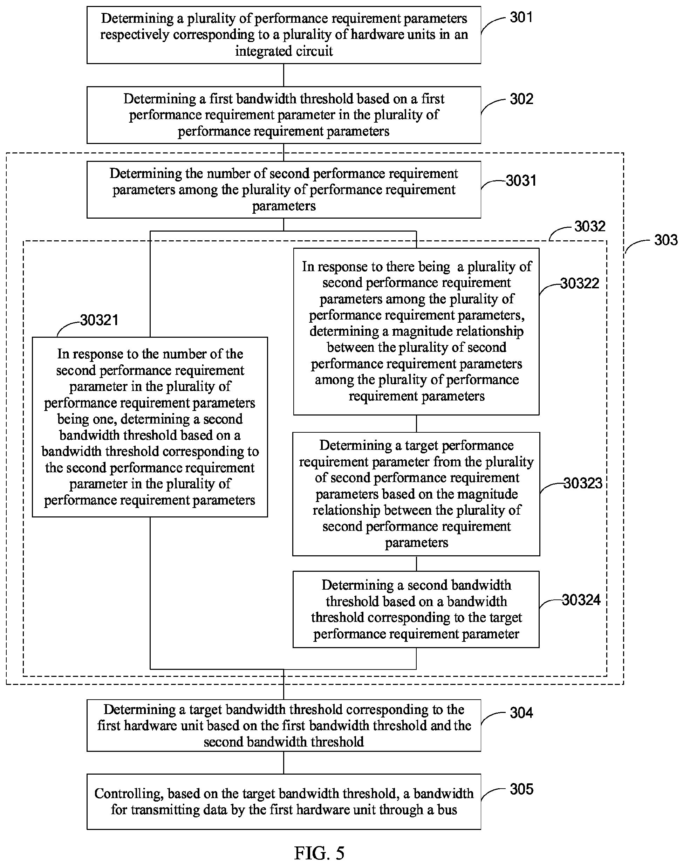

A specific manner in which the bandwidth control unit determines the second bandwidth threshold based on the number of second performance requirement parameters among the plurality of performance requirement parameters and the respective bandwidth threshold corresponding to the at least one second performance requirement parameter is further explained in a subsequent embodiment with reference to FIG. 5.

In this embodiment of this disclosure, considering that different numbers of second performance requirement parameters correspond to different numbers of bandwidth thresholds and the number of bandwidth thresholds affects a manner for determining the second bandwidth threshold, first, the number of second performance requirement parameters among the plurality of performance requirement parameters is determined, and then the second bandwidth threshold is determined based on the number of second performance requirement parameters and the respective bandwidth threshold corresponding to the at least one second performance requirement parameter, so that the second bandwidth threshold better matches real-time performance requirements of tasks executed by one or more second hardware units.

As shown in FIG. 5, based on the embodiment shown in FIG. 4, step 3032 may include the following steps:
Step 30321: In response to the number of the second performance requirement parameter in the plurality of performance requirement parameters being one, determining the second bandwidth threshold based on a bandwidth threshold corresponding to the second performance requirement parameter in the plurality of performance requirement parameters.

In an embodiment, the determining the second bandwidth threshold based on a bandwidth threshold corresponding to the second performance requirement parameter includes: determining the bandwidth threshold corresponding to the second performance requirement parameter as the second bandwidth threshold. For example, if the bandwidth threshold corresponding to the second performance requirement parameter is 30 Gbps, the second bandwidth threshold is 30 Gbps.

In an embodiment, the determining the second bandwidth threshold based on a bandwidth threshold corresponding to the second performance requirement parameter includes: adjusting the bandwidth threshold corresponding to the second performance requirement parameter, to obtain the second bandwidth threshold. The adjusting the bandwidth threshold corresponding to the second performance requirement parameter includes but is not limited to increasing or decreasing the bandwidth threshold corresponding to the second performance requirement parameter. For example, a corresponding compensation value is added to or subtracted from the bandwidth threshold corresponding to the second performance requirement parameter. This is not limited in this embodiment of this disclosure.

Step 30322: In response to there being a plurality of the second performance requirement parameters among the plurality of performance requirement parameters, determining a magnitude relationship between the plurality of second performance requirement parameters among the plurality of performance requirement parameters.

In an embodiment, the determining a magnitude relationship between the plurality of second performance requirement parameters includes: determining a magnitude relationship between performance requirement parameter values respectively corresponding to the plurality of second performance requirement parameters.

Step 30323: Determining a target performance requirement parameter from the plurality of second performance requirement parameters based on the magnitude relationship between the plurality of second performance requirement parameters.

In an embodiment, the determining a target performance requirement parameter from the plurality of second performance requirement parameters based on the magnitude relationship between the plurality of second performance requirement parameters includes:
First, a maximum performance requirement parameter is determined from the plurality of second performance requirement parameters based on the magnitude relationship between the plurality of second performance requirement parameters.

For example, there are three second performance requirement parameters. If a performance requirement parameter value in a second performance requirement parameter c1 is 0003, a performance requirement parameter value in a second performance requirement parameter c2 is 0100, and a performance requirement parameter value in a second performance requirement parameter c3 is 0111, the second performance requirement parameter c3 may be determined as the maximum performance requirement parameter.

Next, the target performance requirement parameter is determined based on the maximum performance requirement parameter.

In an implementation, the determining the target performance requirement parameter based on the maximum performance requirement parameter includes: determining the maximum performance requirement parameter as the target performance requirement parameter. For example, if a performance requirement parameter value in the maximum performance requirement parameter is 0111, a performance requirement parameter value in the target performance requirement parameter is 0111.

In an implementation, the determining the target performance requirement parameter based on the maximum performance requirement parameter includes: adjusting the maximum performance requirement parameter to obtain the target performance requirement parameter. For example, the adjusting the maximum performance requirement parameter includes but is not limited to increasing or decreasing the performance requirement parameter value in the maximum performance requirement parameter. For example, a corresponding compensation value is added to or subtracted from the maximum performance requirement parameter. This is not limited in this embodiment of this disclosure.

Step 30324: Determining the second bandwidth threshold based on a bandwidth threshold corresponding to the target performance requirement parameter.

In an embodiment, due to the correspondence between the plurality of performance requirement parameters and the plurality of bandwidth thresholds, the bandwidth control unit may determine the bandwidth threshold corresponding to the target performance requirement parameter based on the correspondence between the plurality of performance requirement parameters and the plurality of bandwidth thresholds.

For example, the bandwidth control unit may read the correspondence between the plurality of performance requirement parameters and the plurality of bandwidth thresholds from the register, to determine the bandwidth threshold corresponding to the target performance requirement parameter.

In an embodiment, the determining the second bandwidth threshold based on a bandwidth threshold corresponding to the target performance requirement parameter includes: determining the bandwidth threshold corresponding to the target performance requirement parameter as the second bandwidth threshold. For example, if the bandwidth threshold corresponding to the target performance requirement parameter is 30 Gbps, the second bandwidth threshold is 30 Gbps.

In an embodiment, the determining the second bandwidth threshold based on a bandwidth threshold corresponding to the target performance requirement parameter includes: adjusting the bandwidth threshold corresponding to the target performance requirement parameter, to obtain the second bandwidth threshold. For example, the adjusting the bandwidth threshold corresponding to the target performance requirement parameter includes but is not limited to increasing or decreasing a performance requirement parameter value in the target performance requirement parameter. For example, a corresponding compensation value is added to or subtracted from the performance requirement parameter value. This is not limited in this embodiment of this disclosure.

In this embodiment of this disclosure, when there is one second performance requirement parameter, the second bandwidth threshold is determined based on a bandwidth threshold corresponding to the second performance requirement parameter, so that the second bandwidth threshold matches a real-time performance requirement of a task executed by a second hardware unit. When there are a plurality of second performance requirement parameters, a second bandwidth threshold is determined based on a maximum performance requirement parameter in the plurality of second performance requirement parameters, so that the second bandwidth threshold matches a highest real-time performance requirement in a plurality of second hardware units. In this way, the target bandwidth threshold determined subsequently can better match real-time performance requirements of tasks executed by the second hardware units.

As shown in FIG. 6, based on the embodiment shown in FIG. 3, step 304 may include the following steps:
Step 3041: Determining a magnitude relationship between the first bandwidth threshold and the second bandwidth threshold.

The magnitude relationship between the first bandwidth threshold and the second bandwidth threshold may include any one of the following:
a first magnitude relationship in which the first bandwidth threshold is greater than the second bandwidth threshold;
a second magnitude relationship in which the first bandwidth threshold is less than the second bandwidth threshold; or
a third magnitude relationship in which the first bandwidth threshold is equal to the second bandwidth threshold.

Step 3042: Determining the target bandwidth threshold based on the magnitude relationship between the first bandwidth threshold and the second bandwidth threshold.

In an embodiment, when the first bandwidth threshold is greater than the second bandwidth threshold, the target bandwidth threshold may be determined based on the first bandwidth threshold.

For example, if the first bandwidth threshold is 50 Gbps and the second bandwidth threshold is 30 Gbps, since the first bandwidth threshold is greater than the second bandwidth threshold, the target bandwidth threshold may be determined based on the first bandwidth threshold.

In an implementation, the determining the target bandwidth threshold based on the first bandwidth threshold includes: determining the first bandwidth threshold as the target bandwidth threshold.

For example, if the first bandwidth threshold is 50 Gbps, the target bandwidth threshold is 50 Gbps.

In another implementation, the determining the target bandwidth threshold based on the first bandwidth threshold includes: adjusting the first bandwidth threshold to obtain the target bandwidth threshold.

In an example, a corresponding compensation value is added to or subtracted from the first bandwidth threshold to obtain the target bandwidth threshold. For example, the compensation value corresponding to the first bandwidth threshold may be 5 Gbps or 10 Gbps, which is not limited in this embodiment of this disclosure. The compensation value corresponding to the first bandwidth threshold may be preconfigured, or may be dynamic with different tasks executed by the first hardware unit, which is not limited in this embodiment of this disclosure.

For example, if the first bandwidth threshold is 50 Gbps, and the compensation value of the first bandwidth threshold is 5 Gbps, the corresponding compensation value may be added to the first bandwidth threshold to obtain a target bandwidth threshold of 55 Gbps, or the corresponding compensation value may be subtracted from the first bandwidth threshold to obtain a target bandwidth threshold of 45 Gbps. During implementation of this disclosure, whether the corresponding compensation value is added to or subtracted from the first bandwidth threshold may be determined based on an actual need, which is not limited in this embodiment of this disclosure.

In an example, the first bandwidth threshold may be reduced or enlarged by a proportional value corresponding to the first bandwidth threshold, to obtain the target bandwidth threshold. For example, the proportional value corresponding to the first bandwidth threshold may be 5% or 10%, which is not limited in this embodiment of this disclosure. The proportional value corresponding to the first bandwidth threshold may be preconfigured, or may be dynamic with different tasks executed by the first hardware unit, which is not limited in this embodiment of this disclosure.

For example, if the first bandwidth threshold is 50 Gbps, and the proportional value of the first bandwidth threshold is 5%, the first bandwidth threshold may be enlarged by 5% to obtain a target bandwidth threshold of 52.5 Gbps, or the first bandwidth threshold may be reduced by 5% to obtain a target bandwidth threshold of 47.5 Gbps. During implementation of this disclosure, whether the first bandwidth threshold is enlarged or reduced may be determined based on an actual need, which is not limited in this embodiment of this disclosure.

In an embodiment, when the first bandwidth threshold is less than the second bandwidth threshold, the target bandwidth threshold may be determined based on the second bandwidth threshold.

For example, if the first bandwidth threshold is 20 Gbps and the second bandwidth threshold is 60 Gbps, since the first bandwidth threshold is less than the second bandwidth threshold, the target bandwidth threshold may be determined based on the second bandwidth threshold.

In an implementation, the determining the target bandwidth threshold based on the second bandwidth threshold includes: determining the second bandwidth threshold as the target bandwidth threshold.

For example, if the second bandwidth threshold is 60 Gbps, the target bandwidth threshold is 60 Gbps.

In another implementation, the determining the target bandwidth threshold based on the second bandwidth threshold includes: adjusting the second bandwidth threshold to obtain the target bandwidth threshold.

In an example, a corresponding compensation value is added to or subtracted from the second bandwidth threshold to obtain the target bandwidth threshold. For example, the compensation value corresponding to the second bandwidth threshold may be 5 Gbps or 10 Gbps, which is not limited in this embodiment of this disclosure. The compensation value corresponding to the second bandwidth threshold may be preconfigured, or may be dynamic with different tasks executed by the first hardware unit, which is not limited in this embodiment of this disclosure.

For example, if the second bandwidth threshold is 60 Gbps, and the compensation value of the second bandwidth threshold is 5 Gbps, the corresponding compensation value may be added to the second bandwidth threshold to obtain a target bandwidth threshold of 65 Gbps, or the corresponding compensation value may be subtracted from the second bandwidth threshold to obtain a target bandwidth threshold of 55 Gbps. During implementation of this disclosure, whether the corresponding compensation value is added to or subtracted from the second bandwidth threshold may be determined based on an actual need, which is not limited in this embodiment of this disclosure.

In an example, the second bandwidth threshold may be reduced or enlarged by a proportional value corresponding to the second bandwidth threshold, to obtain the target bandwidth threshold. For example, the proportional value corresponding to the second bandwidth threshold may be 5% or 10%, which is not limited in this embodiment of this disclosure. The proportional value corresponding to the second bandwidth threshold may be preconfigured, or may be dynamic with different tasks executed by the first hardware unit, which is not limited in this embodiment of this disclosure.

For example, if the second bandwidth threshold is 60 Gbps, and the proportional value of the second bandwidth threshold is 5%, the second bandwidth threshold may be enlarged by 5% to obtain a target bandwidth threshold of 63 Gbps, or the second bandwidth threshold may be reduced by 5% to obtain a target bandwidth threshold of 57 Gbps. During implementation of this disclosure, whether the second bandwidth threshold is enlarged or reduced may be determined based on an actual need, which is not limited in this embodiment of this disclosure. In an embodiment, when the first bandwidth threshold is equal to the second bandwidth threshold, the target bandwidth threshold may be determined based on the first bandwidth threshold or the second bandwidth threshold.

For a manner of determining the target bandwidth threshold based on the first bandwidth threshold or the second bandwidth threshold, refer to the foregoing embodiment. Details are not described herein again.

It can be understood that, to meet the real-time performance requirement of the executed task, the first hardware unit expects the first bandwidth of the first hardware unit to be greater than or equal to the first bandwidth threshold. To meet the real-time performance requirement of the executed task, the at least one second hardware unit expects the first bandwidth to be less than or equal to the second bandwidth threshold.

If the first bandwidth threshold is greater than the second bandwidth threshold, it indicates that a bus bandwidth required by the first hardware unit to meet the real-time performance requirement of the executed task is greater than a bus bandwidth allocated to the first hardware unit as expected by the second hardware unit. Therefore, the target bandwidth threshold may be determined based on the first bandwidth threshold, so that when the first bandwidth is controlled based on the target bandwidth threshold, the real-time performance requirement of the task executed by the first hardware unit can be preferentially met.

If the first bandwidth threshold is less than the second bandwidth threshold, it indicates that a bus bandwidth required by the first hardware unit to meet the real-time performance requirement of the executed task is less than a bus bandwidth allocated to the first hardware unit as expected by the second hardware unit. Therefore, the target bandwidth threshold may be determined based on the second bandwidth threshold, so that when the first bandwidth is controlled based on the target bandwidth threshold, a larger bus bandwidth can be allocated to the first hardware unit, to accelerate the task executed by the first hardware unit.

If the first bandwidth threshold is equal to the second bandwidth threshold, it indicates that a bus bandwidth required by the first hardware unit to meet the real-time performance requirement of the executed task is the same as a bus bandwidth allocated to the first hardware unit as expected by the second hardware unit. Therefore, the target bandwidth threshold may be determined based on the first bandwidth threshold or the second bandwidth threshold, so that when the first bandwidth is controlled based on the target bandwidth threshold, a bus bandwidth allocated to each hardware unit can meet a real-time performance requirement of a task executed by each hardware unit.

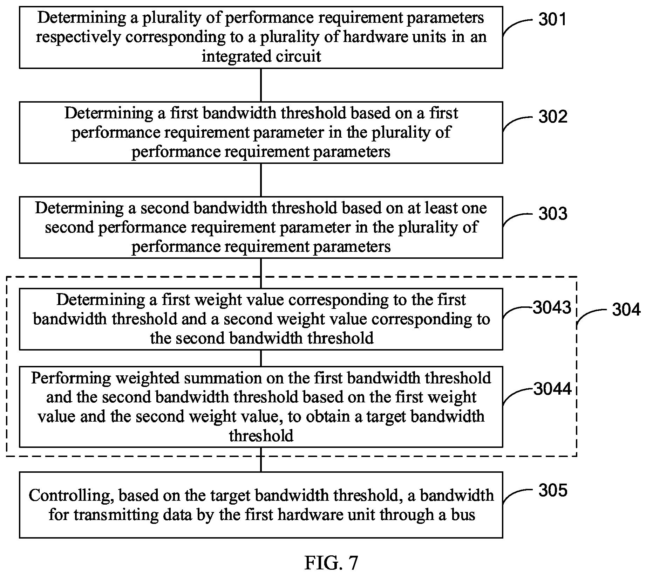

As shown in FIG. 7, based on the embodiment shown in FIG. 3, step 304 may include the following steps:
Step 3043: Determining a first weight value corresponding to the first bandwidth threshold and a second weight value corresponding to the second bandwidth threshold.

The first weight value and the second weight value are both greater than 0 and less than 1. The first weight value and the second weight value may be the same or different. A sum of the first weight value and the second weight value is preferably 1.

In an implementation, the first weight value corresponding to the first bandwidth threshold and the second weight value corresponding to the second bandwidth threshold may be preconfigured, for example, may be preconfigured in the register of the integrated circuit.

In an implementation, the first bandwidth threshold and the second bandwidth threshold may be dynamically adjusted based on a priority of the task executed by the first hardware unit. For example, a higher priority of the task executed by the first hardware unit indicates a larger first weight value and a smaller second weight value, and a lower priority of the task executed by the first hardware unit indicates a larger second weight value and a smaller first weight value.

For example, the task executed by the first hardware unit includes a task in an intelligent driving scenario and a task in a cockpit scenario, and a priority of the task in the intelligent driving scenario is higher than a priority of the task in the cockpit scenario. Then, when the first hardware unit executes the task in the intelligent driving scenario, the first weight value may be 0.7, and the second weight value may be 0.3. Then, when the first hardware unit executes the task in the cockpit scenario, the first weight value may be 0.5, and the second weight value may be 0.5.

Step 3044: Performing weighted summation on the first bandwidth threshold and the second bandwidth threshold based on the first weight value and the second weight value, to obtain the target bandwidth threshold.

The following formula may be used to perform weighted summation on the first bandwidth threshold and the second bandwidth threshold based on the first weight value and the second weight value, to obtain the target bandwidth threshold:
Target bandwidth threshold = First bandwidth threshold × First weight value + Second bandwidth threshold × Second weight value.

In this embodiment of this disclosure, since the first bandwidth threshold matches the real-time performance requirement of the task executed by the first hardware unit, and the second bandwidth threshold matches the real-time performance requirement of the task executed by the second hardware unit, when the target bandwidth threshold is obtained through weighted summation on the first bandwidth threshold and the second bandwidth threshold based on the first weight value and the second weight value, the target bandwidth threshold can allow for both the real-time performance requirement of the task executed by the first hardware unit and the real-time performance requirement of the task executed by the second hardware unit, so that a bus bandwidth is more properly allocated, to improve a capability of the integrated circuit to execute a plurality of tasks in parallel.

In addition, in this embodiment of this disclosure, the weight values of the first bandwidth threshold and the second bandwidth threshold may be further adjusted dynamically based on the priority of the task executed by the first hardware unit, so that when executing a task with a high priority, the first hardware unit can be allocated a larger bus bandwidth, to preferentially meet a real-time performance requirement of the task with the high priority.

As shown in FIG. 8, based on the embodiment shown in FIG. 3, step 305 may include the following steps:
Step 3051: Determining, based on the target bandwidth threshold, an upper bandwidth limit value for transmitting data by the first hardware unit through the bus.

In an implementation, the determining, based on the target bandwidth threshold, an upper bandwidth limit value for transmitting data by the first hardware unit through the bus (that is, determining an upper bandwidth limit value of the first bandwidth) includes: determining the target bandwidth threshold as the upper bandwidth limit value of the first bandwidth. For example, if the target bandwidth threshold is 50 Gbps, the upper bandwidth limit value of the first bandwidth is 50 Gbps.

In another implementation, the determining, based on the target bandwidth threshold, an upper bandwidth limit value for transmitting data by the first hardware unit through the bus (that is, determining an upper bandwidth limit value of the first bandwidth) includes: adjusting the target bandwidth threshold to obtain the upper bandwidth limit value of the first bandwidth. The adjusting the target bandwidth threshold includes but is not limited to increasing or decreasing the target bandwidth threshold. For example, a corresponding compensation value is added to or subtracted from the target bandwidth threshold. This is not limited in this embodiment of this disclosure.

Step 3052: Controlling the bandwidth for transmitting data by the first hardware unit through the bus to be less than or equal to the upper bandwidth limit value.

In some embodiments, the bandwidth control unit may throttle, in a bandwidth throttling manner, an outstanding request throttling manner, a manner combining bandwidth throttling and outstanding request throttling, or other manners, data transmitted by the first hardware unit through the bus, so that a bandwidth (that is, the first bandwidth) for transmitting data by the first hardware unit through the bus is less than or equal to the upper bandwidth limit value. In this embodiment of this disclosure, a manner in which the bandwidth control unit controls the first bandwidth of the first hardware unit to be less than or equal to the upper bandwidth limit value is not specifically limited.

In this embodiment of this disclosure, the target bandwidth threshold can match the real-time performance requirement of the task executed by the first hardware unit and the real-time performance requirement of the task executed by the at least one second hardware unit. Therefore, when the bandwidth for transmitting data by the first hardware unit through the bus is controlled based on the upper bandwidth limit value determined based on the target bandwidth threshold, a bus bandwidth allocated to each hardware unit can meet a real-time performance requirement of each hardware unit.

### Exemplary apparatus

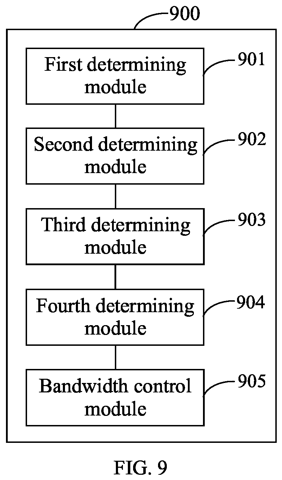

FIG. 9 is a schematic structural diagram of a bandwidth control apparatus for an integrated circuit according to an exemplary embodiment of this disclosure. As shown in FIG. 9, the bandwidth control apparatus 900 for an integrated circuit includes a first determining module 901, a second determining module 902, a third determining module 903, a fourth determining module 904, and a bandwidth control module 905.

The first determining module 901 is configured to determine a plurality of performance requirement parameters respectively corresponding to a plurality of hardware units in the integrated circuit.

The second determining module 902 is configured to determine a first bandwidth threshold based on a first performance requirement parameter in the plurality of performance requirement parameters. The first performance requirement parameter corresponds to a first hardware unit in the plurality of hardware units.

The third determining module 903 is configured to determine a second bandwidth threshold based on at least one second performance requirement parameter in the plurality of performance requirement parameters. The at least one second performance requirement parameter respectively corresponds to at least one second hardware unit in the plurality of hardware units other than the first hardware unit.

The fourth determining module 904 is configured to determine a target bandwidth threshold corresponding to the first hardware unit based on the first bandwidth threshold and the second bandwidth threshold.

The bandwidth control module 905 is configured to control, based on the target bandwidth threshold, a bandwidth for transmitting data by the first hardware unit through a bus.

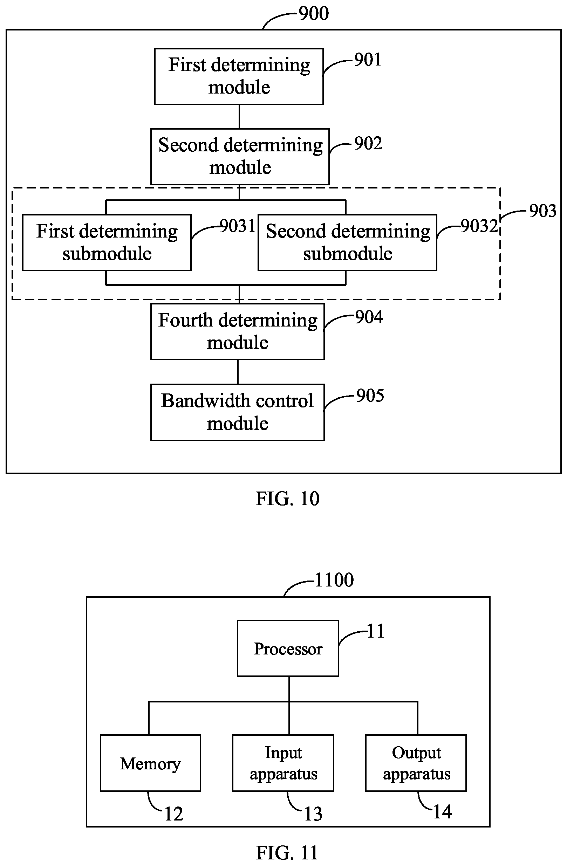

In some embodiments, as shown in FIG. 10, the third determining module 903 includes a first determining submodule 9031 and a second determining submodule 9032. The first determining submodule 9031 is configured to determine the number of second performance requirement parameters among the plurality of performance requirement parameters. The second determining submodule 9032 is configured to determine the second bandwidth threshold based on the number of second performance requirement parameters among the plurality of performance requirement parameters and a respective bandwidth threshold corresponding to the at least one second performance requirement parameter.

In some embodiments, the second determining submodule 9032 is configured to: in response to the number of the second performance requirement parameter in the plurality of performance requirement parameters being one, determine the second bandwidth threshold based on a bandwidth threshold corresponding to the second performance requirement parameter in the plurality of performance requirement parameters.

In some embodiments, the second determining submodule 9032 is configured to: in response to there being a plurality of second performance requirement parameters among the plurality of performance requirement parameters, determine a magnitude relationship between the plurality of second performance requirement parameters among the plurality of performance requirement parameters; determine a target performance requirement parameter from the plurality of second performance requirement parameters based on the magnitude relationship between the plurality of second performance requirement parameters; and determine the second bandwidth threshold based on a bandwidth threshold corresponding to the target performance requirement parameter.

In some embodiments, the second determining submodule 9032 is configured to determine a maximum performance requirement parameter from the plurality of second performance requirement parameters based on the magnitude relationship between the plurality of second performance requirement parameters; and determine the target performance requirement parameter based on the maximum performance requirement parameter.

In some embodiments, the second determining module 902 is configured to determine a magnitude relationship between the first bandwidth threshold and the second bandwidth threshold; and determine the target bandwidth threshold based on the magnitude relationship between the first bandwidth threshold and the second bandwidth threshold.

In some embodiments, the bandwidth control module 905 is configured to determine, based on the target bandwidth threshold, an for transmitting data by the first hardware unit through the bus; and control the bandwidth for transmitting data by the first hardware unit through the bus to be less than or equal to the upper bandwidth limit value.

For beneficial technical effects corresponding to this exemplary apparatus embodiment, refer to the corresponding beneficial technical effects of the foregoing exemplary method section. Details are not described herein again.

### Exemplary electronic device

FIG. 11 is a structural diagram of an electronic device according to an embodiment of this disclosure, including at least one processor 11 and a memory 12.

The processor 11 may be a CPU or other forms of processing units with a data processing capability and/or an instruction execution capability, and may control other components in the electronic device 1100 to perform desired functions.

The memory 12 may include one or more computer program products, and the computer program products may include various forms of computer-readable storage media, for example, a volatile memory and/or a non-volatile memory. The volatile memory may include, for example, a random access memory (RAM) and/or a cache. The non-volatile memory may include, for example, a read-only memory (ROM), a hard disk drive, or a flash memory. One or more computer program instructions may be stored on the computer-readable storage medium, and the processor 11 may run the one or more computer program instructions to implement the bandwidth control method for an integrated circuit and/or other desired functions in the foregoing embodiments of this disclosure.

In an example, the electronic device 1100 may further include an input apparatus 13 and an output apparatus 14, and these components are interconnected by a bus system and/or other forms of connection mechanisms (not shown).

The input device 13 may include a sensor, such as a camera, a laser radar, a millimeter wave radar, an ultrasonic radar, a seat sensor, a microphone, a steering wheel, an accelerator pedal, or a brake pedal.

The output device 14 may output various information to the outside, and may include, for example, a display, a speaker, a communication network, and a remote output device connected thereto.

Certainly, for simplification, FIG. 11 shows only some of components in the electronic device 1100 that are related to this disclosure, and components such as a bus and an input/output interfaces are omitted. In addition, depending on specific application situations, the electronic device 1100 may further include any other appropriate components.

### Exemplary computer program product and computer readable storage medium

In addition to the foregoing method and device, an embodiment of this disclosure may further provide a computer program product, including a computer program instruction, when run by a processor, causing the processor to perform steps in the bandwidth control method for an integrated circuit in the embodiments of this disclosure described in the foregoing "exemplary method" section.

The computer program product may use any combination of one or more programming languages to write program code for performing operations in the embodiments of this disclosure. The programming languages include object-oriented programming languages, such as Java and C++, and also include conventional procedural programming languages, such as a "C" language or similar programming languages. The program code can be entirely executed on a user computing device, partly executed on a user device, executed as an independent software package, partly executed on a user computing device and partly executed on a remote computing device, or entirely executed on a remote computing device or server.

In addition, an embodiment of this disclosure may provide a computer-readable storage medium, storing a computer program instruction, when run by a processor, causing the processor to perform steps in the bandwidth control method for an integrated circuit in the embodiments of this disclosure described in the foregoing "exemplary method" section.

The computer-readable storage medium may be any combination of one or more readable media. The readable medium may be a readable signal medium or a readable storage medium. The readable storage medium may include, for example but not limited to, electronic, magnetic, optical, electromagnetic, infrared, or semiconductor systems, apparatuses, or devices, or any combination thereof. More specific examples (non-exhaustive) of the readable storage medium may include but are not limited to an electrical connection having one or more wires, a portable disk, a hard disk drive, a RAM, a ROM, an erasable programmable read-only memory (EPROM or flash memory), an optical fiber, a portable compact disk read-only memory (CD-ROM), an optical storage device, a magnetic storage device, or any suitable combination thereof.

The basic principle of this disclosure have been described above with reference to specific embodiments, but the advantages, effects, and the like mentioned in this disclosure are merely examples rather than limitations, and cannot be considered as mandatory for the embodiments of this disclosure. In addition, the specific details disclosed above are only for the purposes of illustration and easy understanding, rather than for limitations, which do not limit this disclosure to being implemented by using the specific details.

## Claims

1. A bandwidth control method for an integrated circuit, wherein the bandwidth control method for an integrated circuit comprises:
determining (301) a plurality of performance requirement parameters respectively corresponding to a plurality of hardware units in the integrated circuit, wherein the performance requirement parameters represent respective bus bandwidth requirements of the hardware units, and correspond to respective real-time performance requirements of respective tasks executed by the hardware units;
determining (302) a first bandwidth threshold based on a first performance requirement parameter in the plurality of performance requirement parameters, wherein the first performance requirement parameter corresponds to a first hardware unit in the plurality of hardware units;
determining (303) a second bandwidth threshold based on at least one second performance requirement parameter in the plurality of performance requirement parameters, wherein the at least one second performance requirement parameter respectively corresponds to at least one second hardware unit in the plurality of hardware units other than the first hardware unit;
determining (304) a target bandwidth threshold corresponding to the first hardware unit based on the first bandwidth threshold and the second bandwidth threshold; and
controlling (305), based on the target bandwidth threshold, a bandwidth for transmitting data by the first hardware unit through a bus.

2. The method according to claim 1, wherein the determining a second bandwidth threshold based on at least one second performance requirement parameter in the plurality of performance requirement parameters comprises:
determining (3031) the number of second performance requirement parameters among the plurality of performance requirement parameters; and
determining (3032) the second bandwidth threshold based on the number of second performance requirement parameters among the plurality of performance requirement parameters and a respective bandwidth threshold corresponding to the at least one second performance requirement parameter.

3. The method according to claim 2, wherein determining the second bandwidth threshold based on the number of second performance requirement parameters among the plurality of performance requirement parameters and a respective bandwidth threshold corresponding to the at least one second performance requirement parameter comprises:
in response to the number of the second performance requirement parameter among the plurality of performance requirement parameters being one, determining (30321) the second bandwidth threshold based on a bandwidth threshold corresponding to the second performance requirement parameter among the plurality of performance requirement parameters.

4. The method according to claim 2, wherein determining the second bandwidth threshold based on the number of second performance requirement parameters among the plurality of performance requirement parameters and a respective bandwidth threshold corresponding to the at least one second performance requirement parameter comprises:
in response to there being a plurality of second performance requirement parameters among the plurality of performance requirement parameters, determining (30322) a magnitude relationship between the plurality of second performance requirement parameters among the plurality of performance requirement parameters;
determining (30323) a target performance requirement parameter from the plurality of second performance requirement parameters based on the magnitude relationship between the plurality of second performance requirement parameters; and
determining (30324) the second bandwidth threshold based on a bandwidth threshold corresponding to the target performance requirement parameter.

5. The method according to claim 4, wherein the determining a target performance requirement parameter from the plurality of second performance requirement parameters based on the magnitude relationship between the plurality of second performance requirement parameters comprises:
determining a maximum performance requirement parameter from the plurality of second performance requirement parameters based on the magnitude relationship between the plurality of second performance requirement parameters; and
determining the target performance requirement parameter based on the maximum performance requirement parameter.

6. The method according to any one of claims 1 to 5, wherein the determining a target bandwidth threshold corresponding to the first hardware unit based on the first bandwidth threshold and the second bandwidth threshold comprises:
determining (3041) a magnitude relationship between the first bandwidth threshold and the second bandwidth threshold; and
determining (3042) the target bandwidth threshold based on the magnitude relationship between the first bandwidth threshold and the second bandwidth threshold.

7. The method according to any one of claims 1 to 5, wherein the controlling, based on the target bandwidth threshold, a bandwidth for transmitting data by the first hardware unit through a bus comprises:
determining (3051), based on the target bandwidth threshold, an upper bandwidth limit value for transmitting data by the first hardware unit through the bus; and
controlling (3052) the bandwidth for transmitting data by the first hardware unit through the bus to be less than or equal to the value.

8. An integrated circuit, wherein the integrated circuit comprises:
a plurality of hardware units, configured to determine a plurality of performance requirement parameters respectively corresponding to the plurality of hardware units, wherein the performance requirement parameters represent respective bus bandwidth requirements of the hardware units, and correspond to respective real-time performance requirements of respective tasks executed by the hardware units; and
a bandwidth control unit, configured to determine a first bandwidth threshold based on a first performance requirement parameter in the plurality of performance requirement parameters, wherein the first performance requirement parameter corresponds to a first hardware unit in the plurality of hardware units;
wherein the bandwidth control unit is further configured to determine a second bandwidth threshold based on at least one second performance requirement parameter in the plurality of performance requirement parameters, wherein the at least one second performance requirement parameter respectively corresponds to at least one second hardware unit in the plurality of hardware units other than the first hardware unit;
wherein the bandwidth control unit is further configured to determine a target bandwidth threshold corresponding to the first hardware unit based on the first bandwidth threshold and the second bandwidth threshold; and
wherein the bandwidth control unit is further configured to control, based on the target bandwidth threshold, a bandwidth for transmitting data by the first hardware unit through a bus.

9. The integrated circuit according to claim 8, wherein the bandwidth control unit is further configured to:
determine the number of second performance requirement parameters among the plurality of performance requirement parameters;
determine the second bandwidth threshold based on the number of second performance requirement parameters among the plurality of performance requirement parameters and a respective bandwidth threshold corresponding to the at least one second performance requirement parameter.

10. The integrated circuit according to claim 9, wherein the bandwidth control unit is further configured to: in response to the number of the second performance requirement parameter among the plurality of performance requirement parameters being one, determine the second bandwidth threshold based on a bandwidth threshold corresponding to the second performance requirement parameter among the plurality of performance requirement parameters.

11. The integrated circuit according to claim 9, wherein the bandwidth control unit is further configured to: in response to there being a plurality of second performance requirement parameters among the plurality of performance requirement parameters, determine a magnitude relationship between the plurality of second performance requirement parameters among the plurality of performance requirement parameters; determine a target performance requirement parameter from the plurality of second performance requirement parameters based on the magnitude relationship between the plurality of second performance requirement parameters; and determine the second bandwidth threshold based on a bandwidth threshold corresponding to the target performance requirement parameter.

12. The integrated circuit according to claim 11, wherein the bandwidth control unit is further configured to determine a maximum performance requirement parameter from the plurality of second performance requirement parameters based on the magnitude relationship between the plurality of second performance requirement parameters; and determine the target performance requirement parameter based on the maximum performance requirement parameter.

13. The integrated circuit according to any one of claims 8 to 12, wherein the bandwidth control unit is further configured to:
determine a magnitude relationship between the first bandwidth threshold and the second bandwidth threshold; and
determine the target bandwidth threshold based on the magnitude relationship between the first bandwidth threshold and the second bandwidth threshold.

14. A computer-readable storage medium, storing a computer program configured to perform the bandwidth control method for an integrated circuit according to any one of claims 1 to 7.

15. An electronic device (1100), wherein the electronic device comprises: a processor (11); and
a memory (12), configured to store instructions executable by the processor, wherein
the processor (11) is configured to read the executable instructions from the memory (12), and execute the instruction to implement the bandwidth control method for an integrated circuit according to anyone of claims 1 to 7.

## Patentansprüche

1. Bandbreitensteuerungsverfahren für einen integrierten Schaltkreis, wobei das Bandbreitensteuerungsverfahren für einen integrierten Schaltkreis Folgendes umfasst:
Bestimmen (301) einer Mehrzahl von Leistungsanforderungsparametern, die jeweils einer Mehrzahl von Hardware-Einheiten in dem integrierten Schaltkreis entsprechen, wobei die Leistungsanforderungsparameter jeweilige Busbandbreitenanforderungen der Hardware-Einheiten darstellen und jeweiligen Echtzeit-Leistungsanforderungen jeweiliger von den Hardware-Einheiten ausgeführter Aufgaben entsprechen;
Bestimmen (302) eines ersten Bandbreitenschwellenwerts basierend auf einem ersten Leistungsanforderungsparameter in der Mehrzahl von Leistungsanforderungsparametern, wobei der erste Leistungsanforderungsparameter einer ersten Hardware-Einheit in der Mehrzahl von Hardware-Einheiten entspricht;
Bestimmen (303) eines zweiten Bandbreitenschwellenwerts basierend auf mindestens einem zweiten Leistungsanforderungsparameter in der Mehrzahl von Leistungsanforderungsparametern, wobei der mindestens eine zweite Leistungsanforderungsparameter jeweils mindestens einer zweiten Hardware-Einheit in der Mehrzahl von Hardware-Einheiten mit Ausnahme der ersten Hardware-Einheit entspricht;
Bestimmen (304) eines Ziel-Bandbreitenschwellenwerts, der der ersten Hardware-Einheit entspricht, basierend auf dem ersten Bandbreitenschwellenwert und dem zweiten Bandbreitenschwellenwert; und
Steuern (305), basierend auf dem Ziel-Bandbreitenschwellenwert, einer Bandbreite zum Übertragen von Daten durch die erste Hardware-Einheit über einen Bus.

2. Verfahren nach Anspruch 1, wobei das Bestimmen eines zweiten Bandbreitenschwellenwerts basierend auf mindestens einem zweiten Leistungsanforderungsparameter in der Mehrzahl von Leistungsanforderungsparametern Folgendes umfasst:
Bestimmen (3031) der Anzahl von zweiten Leistungsanforderungsparametern unter der Mehrzahl von Leistungsanforderungsparametern; und
Bestimmen (3032) des zweiten Bandbreitenschwellenwerts basierend auf der Anzahl von zweiten Leistungsanforderungsparametern unter der Mehrzahl von Leistungsanforderungsparametern und einem jeweiligen Bandbreitenschwellenwert, der dem mindestens einen zweiten Leistungsanforderungsparameter entspricht.

3. Verfahren nach Anspruch 2, wobei das Bestimmen des zweiten Bandbreitenschwellenwerts basierend auf der Anzahl von zweiten Leistungsanforderungsparametern unter der Mehrzahl von Leistungsanforderungsparametern und einem jeweiligen Bandbreitenschwellenwert, der dem mindestens einen zweiten Leistungsanforderungsparameter entspricht, Folgendes umfasst:
als Reaktion darauf, dass die Anzahl des zweiten Leistungsanforderungsparameters unter der Mehrzahl von Leistungsanforderungsparametern eins ist, Bestimmen (30321) des zweiten Bandbreitenschwellenwerts basierend auf einem Bandbreitenschwellenwert, der dem zweiten Leistungsanforderungsparameter unter der Mehrzahl von Leistungsanforderungsparametern entspricht.

4. Verfahren nach Anspruch 2, wobei das Bestimmen des zweiten Bandbreitenschwellenwerts basierend auf der Anzahl von zweiten Leistungsanforderungsparametern unter der Mehrzahl von Leistungsanforderungsparametern und einem jeweiligen Bandbreitenschwellenwert, der dem mindestens einen zweiten Leistungsanforderungsparameter entspricht, Folgendes umfasst:
als Reaktion darauf, dass eine Mehrzahl von zweiten Leistungsanforderungsparametern unter der Mehrzahl von Leistungsanforderungsparametern vorhanden ist, Bestimmen (30322) einer Größenbeziehung zwischen der Mehrzahl von zweiten Leistungsanforderungsparametern unter der Mehrzahl von Leistungsanforderungsparametern;
Bestimmen (30323) eines Ziel-Leistungsanforderungsparameters aus der Mehrzahl von zweiten Leistungsanforderungsparametern basierend auf der Größenbeziehung zwischen der Mehrzahl von zweiten Leistungsanforderungsparametern; und
Bestimmen (30324) des zweiten Bandbreitenschwellenwerts basierend auf einem Bandbreitenschwellenwert, der dem Ziel-Leistungsanforderungsparameter entspricht.

5. Verfahren nach Anspruch 4, wobei das Bestimmen eines Ziel-Leistungsanforderungsparameters aus der Mehrzahl von zweiten Leistungsanforderungsparametern basierend auf der Größenbeziehung zwischen der Mehrzahl von zweiten Leistungsanforderungsparametern Folgendes umfasst:
Bestimmen eines maximalen Leistungsanforderungsparameters aus der Mehrzahl von zweiten Leistungsanforderungsparametern basierend auf der Größenbeziehung zwischen der Mehrzahl von zweiten Leistungsanforderungsparametern; und
Bestimmen des Ziel-Leistungsanforderungsparameters basierend auf dem maximalen Leistungsanforderungsparameter.

6. Verfahren nach einem der Ansprüche 1 bis 5, wobei das Bestimmen eines Ziel-Bandbreitenschwellenwerts, der der ersten Hardware-Einheit entspricht, basierend auf dem ersten Bandbreitenschwellenwert und dem zweiten Bandbreitenschwellenwert Folgendes umfasst:
Bestimmen (3041) einer Größenbeziehung zwischen dem ersten Bandbreitenschwellenwert und dem zweiten Bandbreitenschwellenwert; und
Bestimmen (3042) des Ziel-Bandbreitenschwellenwerts basierend auf der Größenbeziehung zwischen dem ersten Bandbreitenschwellenwert und dem zweiten Bandbreitenschwellenwert.

7. Verfahren nach einem der Ansprüche 1 bis 5, wobei das Steuern, basierend auf dem Ziel-Bandbreitenschwellenwert, einer Bandbreite zum Übertragen von Daten durch die erste Hardware-Einheit über einen Bus Folgendes umfasst:
Bestimmen (3051), basierend auf dem Ziel-Bandbreitenschwellenwert, eines oberen Bandbreitengrenzwerts zum Übertragen von Daten durch die erste Hardware-Einheit über den Bus; und
Steuern (3052) der Bandbreite zum Übertragen von Daten durch die erste Hardware-Einheit über den Bus derart, dass sie kleiner als oder gleich dem Wert ist.

8. Integrierter Schaltkreis, wobei der integrierte Schaltkreis Folgendes umfasst:
eine Mehrzahl von Hardware-Einheiten, die dazu ausgebildet sind, eine Mehrzahl von Leistungsanforderungsparametern zu bestimmen, die jeweils der Mehrzahl von Hardware-Einheiten entsprechen, wobei die Leistungsanforderungsparameter jeweilige Busbandbreitenanforderungen der Hardware-Einheiten darstellen und jeweiligen Echtzeit-Leistungsanforderungen jeweiliger von den Hardware-Einheiten ausgeführter Aufgaben entsprechen; und
eine Bandbreitensteuerungseinheit, die dazu ausgebildet ist, einen ersten Bandbreitenschwellenwert basierend auf einem ersten Leistungsanforderungsparameter in der Mehrzahl von Leistungsanforderungsparametern zu bestimmen, wobei der erste Leistungsanforderungsparameter einer ersten Hardware-Einheit in der Mehrzahl von Hardware-Einheiten entspricht;
wobei die Bandbreitensteuerungseinheit ferner dazu ausgebildet ist, einen zweiten Bandbreitenschwellenwert basierend auf mindestens einem zweiten Leistungsanforderungsparameter in der Mehrzahl von Leistungsanforderungsparametern zu bestimmen, wobei der mindestens eine zweite Leistungsanforderungsparameter jeweils mindestens einer zweiten Hardware-Einheit in der Mehrzahl von Hardware-Einheiten mit Ausnahme der ersten Hardware-Einheit entspricht;
wobei die Bandbreitensteuerungseinheit ferner dazu ausgebildet ist, einen Ziel-Bandbreitenschwellenwert, der der ersten Hardware-Einheit entspricht, basierend auf dem ersten Bandbreitenschwellenwert und dem zweiten Bandbreitenschwellenwert zu bestimmen; und
wobei die Bandbreitensteuerungseinheit ferner dazu ausgebildet ist, basierend auf dem Ziel-Bandbreitenschwellenwert eine Bandbreite zum Übertragen von Daten durch die erste Hardware-Einheit über einen Bus zu steuern.

9. Integrierter Schaltkreis nach Anspruch 8, wobei die Bandbreitensteuerungseinheit ferner dazu ausgebildet ist:
die Anzahl von zweiten Leistungsanforderungsparametern unter der Mehrzahl von Leistungsanforderungsparametern zu bestimmen;
den zweiten Bandbreitenschwellenwert basierend auf der Anzahl von zweiten Leistungsanforderungsparametern unter der Mehrzahl von Leistungsanforderungsparametern und einem jeweiligen Bandbreitenschwellenwert, der dem mindestens einen zweiten Leistungsanforderungsparameter entspricht, zu bestimmen.

10. Integrierter Schaltkreis nach Anspruch 9, wobei die Bandbreitensteuerungseinheit ferner dazu ausgebildet ist: als Reaktion darauf, dass die Anzahl des zweiten Leistungsanforderungsparameters unter der Mehrzahl von Leistungsanforderungsparametern eins ist, den zweiten Bandbreitenschwellenwert basierend auf einem Bandbreitenschwellenwert, der dem zweiten Leistungsanforderungsparameter unter der Mehrzahl von Leistungsanforderungsparametern entspricht, zu bestimmen.

11. Integrierter Schaltkreis nach Anspruch 9, wobei die Bandbreitensteuerungseinheit ferner dazu ausgebildet ist: als Reaktion darauf, dass eine Mehrzahl von zweiten Leistungsanforderungsparametern unter der Mehrzahl von Leistungsanforderungsparametern vorhanden ist, eine Größenbeziehung zwischen der Mehrzahl von zweiten Leistungsanforderungsparametern unter der Mehrzahl von Leistungsanforderungsparametern zu bestimmen; einen Ziel-Leistungsanforderungsparameter aus der Mehrzahl von zweiten Leistungsanforderungsparametern basierend auf der Größenbeziehung zwischen der Mehrzahl von zweiten Leistungsanforderungsparametern zu bestimmen; und den zweiten Bandbreitenschwellenwert basierend auf einem Bandbreitenschwellenwert, der dem Ziel-Leistungsanforderungsparameter entspricht, zu bestimmen.

12. Integrierter Schaltkreis nach Anspruch 11, wobei die Bandbreitensteuerungseinheit ferner dazu ausgebildet ist, einen maximalen Leistungsanforderungsparameter aus der Mehrzahl von zweiten Leistungsanforderungsparametern basierend auf der Größenbeziehung zwischen der Mehrzahl von zweiten Leistungsanforderungsparametern zu bestimmen; und den Ziel-Leistungsanforderungsparameter basierend auf dem maximalen Leistungsanforderungsparameter zu bestimmen.

13. Integrierter Schaltkreis nach einem der Ansprüche 8 bis 12, wobei die Bandbreitensteuerungseinheit ferner dazu ausgebildet ist:
eine Größenbeziehung zwischen dem ersten Bandbreitenschwellenwert und dem zweiten Bandbreitenschwellenwert zu bestimmen; und
den Ziel-Bandbreitenschwellenwert basierend auf der Größenbeziehung zwischen dem ersten Bandbreitenschwellenwert und dem zweiten Bandbreitenschwellenwert zu bestimmen.

14. Computerlesbares Speichermedium, das ein Computerprogramm speichert, das dazu ausgebildet ist, das Bandbreitensteuerungsverfahren für einen integrierten Schaltkreis nach einem der Ansprüche 1 bis 7 durchzuführen.

15. Elektronische Vorrichtung (1100), wobei die elektronische Vorrichtung Folgendes umfasst:
einen Prozessor (11); und
einen Speicher (12), der dazu ausgebildet ist, durch den Prozessor ausführbare Anweisungen zu speichern, wobei
der Prozessor (11) dazu ausgebildet ist, die ausführbaren Anweisungen aus dem Speicher (12) auszulesen und die Anweisung auszuführen, um das Bandbreitensteuerungsverfahren für einen integrierten Schaltkreis nach einem der Ansprüche 1 bis 7 zu implementieren.

## Revendications

1. Procédé de commande de largeur de bande pour un circuit intégré, dans lequel le procédé de commande de largeur de bande pour un circuit intégré comprend :
déterminer (301) une pluralité de paramètres d'exigence de performance correspondant respectivement à une pluralité d'unités matérielles dans le circuit intégré, dans lequel les paramètres d'exigence de performance représentent des exigences de largeur de bande de bus respectives des unités matérielles et correspondent à des exigences de performance en temps réel respectives de tâches respectives exécutées par les unités matérielles ;
déterminer (302) un premier seuil de largeur de bande sur la base d'un premier paramètre d'exigence de performance parmi la pluralité de paramètres d'exigence de performance, dans lequel le premier paramètre d'exigence de performance correspond à une première unité matérielle parmi la pluralité d'unités matérielles ;
déterminer (303) un deuxième seuil de largeur de bande sur la base d'au moins un deuxième paramètre d'exigence de performance parmi la pluralité de paramètres d'exigence de performance, dans lequel l'au moins un deuxième paramètre d'exigence de performance correspond respectivement à au moins une deuxième unité matérielle parmi la pluralité d'unités matérielles autres que la première unité matérielle ;
déterminer (304) un seuil de largeur de bande cible correspondant à la première unité matérielle sur la base du premier seuil de largeur de bande et du deuxième seuil de largeur de bande ; et
commander (305), sur la base du seuil de largeur de bande cible, une largeur de bande pour la transmission de données par la première unité matérielle via un bus.

2. Procédé selon la revendication 1, dans lequel la détermination d'un deuxième seuil de largeur de bande sur la base d'au moins un deuxième paramètre d'exigence de performance parmi la pluralité de paramètres d'exigence de performance comprend :
déterminer (3031) le nombre de deuxièmes paramètres d'exigence de performance parmi la pluralité de paramètres d'exigence de performance ; et
déterminer (3032) le deuxième seuil de largeur de bande sur la base du nombre de deuxièmes paramètres d'exigence de performance parmi la pluralité de paramètres d'exigence de performance et d'un seuil de largeur de bande respectif correspondant à l'au moins un deuxième paramètre d'exigence de performance.

3. Procédé selon la revendication 2, dans lequel la détermination du deuxième seuil de largeur de bande sur la base du nombre de deuxièmes paramètres d'exigence de performance parmi la pluralité de paramètres d'exigence de performance et d'un seuil de largeur de bande respectif correspondant à l'au moins un deuxième paramètre d'exigence de performance comprend :
en réponse au fait que le nombre du deuxième paramètre d'exigence de performance parmi la pluralité de paramètres d'exigence de performance est égal à un, déterminer (30321) le deuxième seuil de largeur de bande sur la base d'un seuil de largeur de bande correspondant au deuxième paramètre d'exigence de performance parmi la pluralité de paramètres d'exigence de performance.

4. Procédé selon la revendication 2, dans lequel la détermination du deuxième seuil de largeur de bande sur la base du nombre de deuxièmes paramètres d'exigence de performance parmi la pluralité de paramètres d'exigence de performance et d'un seuil de largeur de bande respectif correspondant à l'au moins un deuxième paramètre d'exigence de performance comprend :
en réponse à la présence d'une pluralité de deuxièmes paramètres d'exigence de performance parmi la pluralité de paramètres d'exigence de performance, déterminer (30322) une relation de grandeur entre la pluralité de deuxièmes paramètres d'exigence de performance parmi la pluralité de paramètres d'exigence de performance ;
déterminer (30323) un paramètre d'exigence de performance cible parmi la pluralité de deuxièmes paramètres d'exigence de performance sur la base de la relation de grandeur entre la pluralité de deuxièmes paramètres d'exigence de performance ; et
déterminer (30324) le deuxième seuil de largeur de bande sur la base d'un seuil de largeur de bande correspondant au paramètre d'exigence de performance cible.

5. Procédé selon la revendication 4, dans lequel la détermination d'un paramètre d'exigence de performance cible parmi la pluralité de deuxièmes paramètres d'exigence de performance sur la base de la relation de grandeur entre la pluralité de deuxièmes paramètres d'exigence de performance comprend :
déterminer un paramètre d'exigence de performance maximal parmi la pluralité de deuxièmes paramètres d'exigence de performance sur la base de la relation de grandeur entre la pluralité de deuxièmes paramètres d'exigence de performance ; et
déterminer le paramètre d'exigence de performance cible sur la base du paramètre d'exigence de performance maximal.

6. Procédé selon l'une quelconque des revendications 1 à 5, dans lequel la détermination d'un seuil de largeur de bande cible correspondant à la première unité matérielle sur la base du premier seuil de largeur de bande et du deuxième seuil de largeur de bande comprend :
déterminer (3041) une relation de grandeur entre le premier seuil de largeur de bande et le deuxième seuil de largeur de bande ; et
déterminer (3042) le seuil de largeur de bande cible sur la base de la relation de grandeur entre le premier seuil de largeur de bande et le deuxième seuil de largeur de bande.

7. Procédé selon l'une quelconque des revendications 1 à 5, dans lequel la commande, sur la base du seuil de largeur de bande cible, d'une largeur de bande pour la transmission de données par la première unité matérielle via un bus comprend :
déterminer (3051), sur la base du seuil de largeur de bande cible, une valeur limite supérieure de largeur de bande pour la transmission de données par la première unité matérielle via le bus ; et
commander (3052) la largeur de bande pour la transmission de données par la première unité matérielle via le bus de sorte qu'elle soit inférieure ou égale à la valeur.

8. Circuit intégré, dans lequel le circuit intégré comprend :
une pluralité d'unités matérielles, configurées pour déterminer une pluralité de paramètres d'exigence de performance correspondant respectivement à la pluralité d'unités matérielles, dans lequel les paramètres d'exigence de performance représentent des exigences de largeur de bande de bus respectives des unités matérielles et correspondent à des exigences de performance en temps réel respectives de tâches respectives exécutées par les unités matérielles ; et
une unité de commande de largeur de bande, configurée pour déterminer un premier seuil de largeur de bande sur la base d'un premier paramètre d'exigence de performance parmi la pluralité de paramètres d'exigence de performance, dans lequel le premier paramètre d'exigence de performance correspond à une première unité matérielle parmi la pluralité d'unités matérielles ;
dans lequel l'unité de commande de largeur de bande est en outre configurée pour déterminer un deuxième seuil de largeur de bande sur la base d'au moins un deuxième paramètre d'exigence de performance parmi la pluralité de paramètres d'exigence de performance, dans lequel l'au moins un deuxième paramètre d'exigence de performance correspond respectivement à au moins une deuxième unité matérielle parmi la pluralité d'unités matérielles autres que la première unité matérielle ;
dans lequel l'unité de commande de largeur de bande est en outre configurée pour déterminer un seuil de largeur de bande cible correspondant à la première unité matérielle sur la base du premier seuil de largeur de bande et du deuxième seuil de largeur de bande ; et
dans lequel l'unité de commande de largeur de bande est en outre configurée pour commander, sur la base du seuil de largeur de bande cible, une largeur de bande pour la transmission de données par la première unité matérielle via un bus.

9. Circuit intégré selon la revendication 8, dans lequel l'unité de commande de largeur de bande est en outre configurée pour :
déterminer le nombre de deuxièmes paramètres d'exigence de performance parmi la pluralité de paramètres d'exigence de performance ;
déterminer le deuxième seuil de largeur de bande sur la base du nombre de deuxièmes paramètres d'exigence de performance parmi la pluralité de paramètres d'exigence de performance et d'un seuil de largeur de bande respectif correspondant à l'au moins un deuxième paramètre d'exigence de performance.

10. Circuit intégré selon la revendication 9, dans lequel l'unité de commande de largeur de bande est en outre configurée pour : en réponse au fait que le nombre du deuxième paramètre d'exigence de performance parmi la pluralité de paramètres d'exigence de performance est égal à un, déterminer le deuxième seuil de largeur de bande sur la base d'un seuil de largeur de bande correspondant au deuxième paramètre d'exigence de performance parmi la pluralité de paramètres d'exigence de performance.

11. Circuit intégré selon la revendication 9, dans lequel l'unité de commande de largeur de bande est en outre configurée pour : en réponse à la présence d'une pluralité de deuxièmes paramètres d'exigence de performance parmi la pluralité de paramètres d'exigence de performance, déterminer une relation de grandeur entre la pluralité de deuxièmes paramètres d'exigence de performance parmi la pluralité de paramètres d'exigence de performance ; déterminer un paramètre d'exigence de performance cible parmi la pluralité de deuxièmes paramètres d'exigence de performance sur la base de la relation de grandeur entre la pluralité de deuxièmes paramètres d'exigence de performance ; et déterminer le deuxième seuil de largeur de bande sur la base d'un seuil de largeur de bande correspondant au paramètre d'exigence de performance cible.

12. Circuit intégré selon la revendication 11, dans lequel l'unité de commande de largeur de bande est en outre configurée pour déterminer un paramètre d'exigence de performance maximal parmi la pluralité de deuxièmes paramètres d'exigence de performance sur la base de la relation de grandeur entre la pluralité de deuxièmes paramètres d'exigence de performance ; et déterminer le paramètre d'exigence de performance cible sur la base du paramètre d'exigence de performance maximal.

13. Circuit intégré selon l'une quelconque des revendications 8 à 12, dans lequel l'unité de commande de largeur de bande est en outre configurée pour :
déterminer une relation de grandeur entre le premier seuil de largeur de bande et le deuxième seuil de largeur de bande ; et
déterminer le seuil de largeur de bande cible sur la base de la relation de grandeur entre le premier seuil de largeur de bande et le deuxième seuil de largeur de bande.

14. Support de stockage lisible par ordinateur, stockant un programme informatique configuré pour exécuter le procédé de commande de largeur de bande pour un circuit intégré selon l'une quelconque des revendications 1 à 7.

15. Dispositif électronique (1100), dans lequel le dispositif électronique comprend :
un processeur (11) ; et
une mémoire (12), configurée pour stocker des instructions exécutables par le processeur, dans lequel
le processeur (11) est configuré pour lire les instructions exécutables depuis la mémoire (12) et exécuter l'instruction pour mettre en œuvre le procédé de commande de largeur de bande pour un circuit intégré selon l'une quelconque des revendications 1 à 7.
